# EUROPEAN PATENT APPLICATION

(11) **EP 4 787 910 A1**
(43) Date of publication of application: **05.08.2026**
(21) Application number: 23953803.6
(22) Date of filing: 28.09.2023
(51) Int. Cl.: H04W 4/40

(54) **DATA TRANSMISSION METHOD AND APPARATUS**

(71) Applicant: Yinwang Intelligent Technologies Co., Ltd., Shenzhen, Guangdong 518110 (CN)
(72) Inventor: ZHANG, Xingxin, Shenzhen, Guangdong 518129 (CN)
(74) Representative: Maiwald GmbH
(86) International application number: PCT/CN2023/122970
(87) International publication number: WO 2025/065659

(57) **Abstract**

A data transmission method and an apparatus are provided, and can be applied to the field of autonomous driving, intelligent driving, or self-driving. In embodiments of this application, a communication interface of a first electronic device is at least configured to send to-be-sent data packets of M data streams, and M is an integer greater than or equal to 1. A first data stream is one of the M data streams, a size of a to-be-sent data packet of the first data stream is a first target value, the first target value is associated with a target bandwidth of the first data stream, and the target bandwidth is less than or equal to a bandwidth of the communication interface. The communication interface sends the M data streams, and a size of a to-be-sent data packet of each data stream is a fixed value. For example, the size of the to-be-sent data packet of the first data stream is the first target value. In this way, data transmission of the M data streams can be performed through a fixed-bandwidth interface. This improves data transmission efficiency, and reduces data transmission costs.

## Description

### TECHNICAL FIELD

This application relates to the field of communication technologies, and in particular, to a data transmission method and an apparatus.

### BACKGROUND

With development of technologies, functions of electronic products are increasingly powerful, and data exchange between devices inside the products is increasingly frequent and complex. An intelligent vehicle is used as an example. Various electronic devices may be installed in the intelligent vehicle to implement different functions, to improve comfort and safety of a driver and a passenger. For example, a plurality of speakers and displays installed inside the vehicle are configured to provide comfortable experience in audio and video entertainment for the driver and the passenger. For another example, an ultrasonic radar, a lidar, a millimeter-wave radar, and the like are configured to sense an environment around the vehicle and feed back the environment to the driver of the vehicle, to reduce misjudgment of the driver and improve safety of the driver and the passenger.

Usually, normal running of one function may be accompanied by data exchange of a plurality of data streams; and data encapsulation formats of the data streams may be different, and even sizes of data packets belonging to a same data stream may also be different (where the data stream is referred to as a variable-rate data stream). How to use a fixed-bandwidth link to transmit data of a plurality of data streams or data of a variable-rate data stream is an urgent problem to be resolved currently.

### SUMMARY

Embodiments of this application provide a data transmission method and an apparatus, so that data of a plurality of data streams or data of a variable-rate data stream can be transmitted through a fixed-bandwidth link.

**According to a first aspect,** an embodiment of this application provides a data transmission method, applied to a first electronic device. The first electronic device includes a communication interface, the communication interface is at least configured to send to-be-sent data packets of M data streams, M is an integer greater than or equal to 1, and the method includes:
obtaining a first data packet, where the first data packet is a to-be-sent data packet of a first data stream; and
sending the first data packet, where
a size of the to-be-sent data packet of the first data stream is a first target value, the first target value is associated with a target bandwidth of the first data stream, the first data stream is one of the M data streams, the target bandwidth is less than or equal to a bandwidth of the communication interface, the to-be-sent data packet includes indication information and load information, a size of the load information is a second target value, and the second target value is less than the first target value.

In this embodiment of this application, the communication interface of the first electronic device is at least configured to send a to-be-sent data packet of one or more data streams, and a size of each to-be-sent data packet of one data stream is a fixed value, and is associated with a bandwidth allocated to the data stream. Optionally, sizes of data packets between data streams may be unequal. In a manner of allocating a bandwidth to each data stream, and then determining, based on the bandwidth, a size of a to-be-sent data packet of each data stream as a fixed value, a variable-rate data stream may be adjusted to a fixed rate for data transmission. In addition, data of a plurality of data streams may be transmitted through one fixed-bandwidth communication interface. In this case, data transmission efficiency can be improved, and data transmission costs can be reduced.

**In a possible implementation of the first aspect,** when a size of a target data packet of the first data stream is less than the second target value, load information in the first data packet includes the target data packet and a padding bit.

In this embodiment of this application, the target data packet of the first data stream may be a data packet received by the first electronic device, or may be a data packet from another unit of the first electronic device. This is not limited. The target data packet may also be understood as a to-be-encapsulated data packet, and a data packet obtained after encapsulation is the first data packet. For example, the target data packet may be used as partial data of the load information in the first data packet. When the target data packet cannot fill the load information in the first data packet, in a manner of padding an invalid bit, the target data packet+the padding bit meet a requirement of the load information, so that it can be ensured that a size of the first data packet is a fixed value, and data of the first data stream can be transmitted by using a fixed bandwidth. This is equivalent to that in a data encapsulation manner, a target data packet whose size is less than the second target value is encapsulated into a first data packet whose size is less than the first target value, so that data can be transmitted by using the fixed bandwidth.

**In another possible implementation of the first aspect,** when a size of a target data packet of the first data stream is equal to the second target value, load information in the first data packet is the target data packet.

In this embodiment of this application, the target data packet of the first data stream may be a data packet received by the first electronic device, or may be a data packet from another unit of the first electronic device. This is not limited. The target data packet may also be understood as a to-be-encapsulated data packet, and a data packet obtained after encapsulation is the first data packet. For example, the target data packet may be used as partial data of the load information in the first data packet. When the target data packet can fill the load information in the first data packet, the target data packet may be directly used as the load information in the first data packet, to obtain the first data packet. Because a size of the first data packet is a fixed value, data of the first data stream can be transmitted by using a fixed bandwidth. This is equivalent to that in a data encapsulation manner, a target data packet whose size is equal to the second target value is encapsulated into a first data packet whose size is the first target value, so that data can be transmitted by using the fixed bandwidth.

**In another possible implementation of the first aspect,** when a target data packet of the first data stream is N times the second target value, N is an integer greater than or equal to 1, the target data packet consists of N segments of data (which may be understood as that the target data packet includes the N segments of data), a size of each of the N segments of data is the second target value, and load information in the first data packet is one of the N segments of data.

In this embodiment of this application, because N is the integer greater than or equal to 1, and the target data packet consists of the N segments of data, the size of each segment of data is the second target value, which is equivalent to that the target data packet is evenly divided into the N segments of data, and the size of each segment of data is the second target value. Therefore, any one of the N segments of data may be used as the load information in the first data packet, so that a size of the first data packet is a fixed value, and data of the first data stream can be transmitted by using a fixed bandwidth. This is equivalent to that in a data encapsulation manner, a target data packet whose size is an integer multiple of the second target value is encapsulated into a first data packet whose size is the first target value, so that data can be transmitted by using the fixed bandwidth.

**In another possible implementation of the first aspect,** when a size of a target data packet of the first data stream is L times the second target value, L is not an integer, L is greater than 1, the target data packet consists of P segments of data (which may be understood as that the target data packet includes the P segments of data), P is an integer obtained by performing a ceiling operation on L, the P segments of data include P-1 segments of data and a P^{th} segment of data, a size of each of the P-1 segments of data is the second target value, a size of the P^{th} segment of data is less than the second target value, and load information in the first data packet is one of the P-1 segments of data, or load information in the first data packet includes the P^{th} segment of data and a padding bit.

**In another possible implementation of the first aspect,** when a size of a target data packet of the first data stream is K times the second target value, K is not an integer, K is greater than 0 and less than 1, and load information in the first data packet is the target data packet and a padding bit.

In this embodiment of this application, the size of the target data packet of the first data stream is L times the second target value (where L is not an integer), and the target data packet consists of P-1 segments of data whose sizes are the second target value and one segment of data (which is referred to as a P^{th} segment of data) whose size is less than the second target value. Any one of the P-1 segments of data whose sizes are the second target value is used as the load information in the first data packet, or the P^{th} segment of data and the padding bit together form the load information in the first data packet, so that a size of the first data packet is a fixed value, and data of the first data stream can be transmitted by using a fixed bandwidth. This is equivalent to that in a data encapsulation manner, a target data packet whose size is a fractional multiple of the second target value is encapsulated into a first data packet whose size is the first target value, so that data can be transmitted by using the fixed bandwidth.

It may be learned from the foregoing four embodiments that sizes of the target data packet of the first data stream may be different (where for example, the sizes are respectively less than the second target value, equal to the second target value, and greater than the second target value). In the solution provided in this embodiment of this application, the target data packet is encapsulated into the first data packet whose size is a fixed value in a manner of segmenting or padding the target data packet, so that the data of the first data stream can be transmitted by using the fixed bandwidth.

**In another possible implementation of the first aspect,** when the first electronic device does not receive the target data packet of the first data stream, all of the load information in the first data packet is a padding bit, that is, a quantity of valid bits included in the load information in the first data packet is zero.

In this embodiment of this application, a case in which the first electronic device does not receive the target data packet of the first data stream may be a case in which the first electronic device does not receive the target data packet in a data sending periodicity. The load information in the first data packet is padded with the bit, and the quantity of valid bits included in the first data packet is marked as zero, so that it can be ensured that transmission on a fixed-bandwidth interface is not interrupted, and abnormal transmission is avoided.

**In another possible implementation of the first aspect,** the method further includes: sequentially sending the to-be-sent data packets of the M data streams through the communication interface.

In this embodiment of this application, the communication interface sequentially sends the to-be-sent data packets of the M data streams. It may be that the communication interface sequentially sends the data packets of the M data streams in one sending periodicity. For example, if M is 2, the to-be-sent data packets of the M data streams are respectively a first to-be-sent data packet and a second to-be-sent data packet, and the communication interface may sequentially send the first to-be-sent data packet and the second to-be-sent data packet in one periodicity. Further, it is presented in a scale of a plurality of periodicities that the first electronic device alternately sends the first to-be-sent data packet and the second to-be-sent data packet. For example, the first electronic device sequentially sends the first to-be-sent data packet and the second to-be-sent data packet. Specifically, a sequence of sending the data packets by the first electronic device is: the first to-be-sent data packet, the second to-be-sent data packet, the first to-be-sent data packet, the second to-be-sent data packet, .... Because a size of each data packet in the to-be-sent data packets of the M data streams is a fixed value, the to-be-sent data packets of the M data streams may occupy a fixed bandwidth, and data of the M data streams may be sent through a fixed-bandwidth transmission interface.

**In another possible implementation of the first aspect,** the indication information includes first indication information, and the first indication information indicates a data stream type to which the to-be-sent data packet belongs.

In this embodiment of this application, the indication information in the first data packet includes the first indication information, and the first indication information indicates the data stream type to which the to-be-sent data packet belongs, so that a data receive end can determine, based on the first indication information, the data stream type to which the to-be-sent data packet belongs, and select an unpacking method corresponding to the data stream type to unpack the to-be-sent data packet. In addition, the to-be-sent data packet may be further sent to a corresponding data stream node based on the data stream type.

**In another possible implementation of the first aspect,** the indication information includes second indication information, and the second indication information indicates a quantity of valid bits in the to-be-sent data packet.

In this embodiment of this application, the indication information in the first data packet includes the second indication information, and the second indication information indicates the quantity of valid bits in the to-be-sent data packet, so that the data receive end can obtain a quantity of valid bits in the first data packet based on the second indication information, valid data in the first data packet can be extracted, and original data of the first data stream can be restored.

**In another possible implementation of the first aspect,** the indication information includes third indication information, and the third indication information indicates a data stream identifier to which the to-be-sent data packet belongs.

In this embodiment of this application, a data stream to which the to-be-sent data packet belongs may be determined based on the third indication information. In some scenarios, there are a plurality of data streams of a same type, and the data stream to which the to-be-sent data packet belongs cannot be determined based on only the first indication information. Therefore, the to-be-sent data packet cannot be placed on a correct data transmission node. The data stream type to which the to-be-sent data packet belongs is determined by using the first indication information, and then the data stream identifier to which the to-be-sent data packet belongs is determined based on the third indication information, so that the data stream to which the to-be-sent data packet belongs can be accurately obtained, and then the to-be-sent data packet can be transmitted through the correct data transmission node.

**In another possible implementation of the first aspect,** that the first data packet is the to-be-sent data packet of the first data stream includes:

The first data packet is the to-be-sent data packet of the first data stream in a target transmission periodicity, and the communication interface is at least configured to send the to-be-sent data packets of the M data streams in the target transmission periodicity.

In this embodiment of this application, the target transmission periodicity may be one data sending periodicity. Because sizes of the to-be-sent data packets of the M data streams are all fixed values, the target transmission periodicity is at least used to send the to-be-sent data packets of the M data streams, which is equivalent to that a quantity of data packets to be sent in the target transmission periodicity may be a fixed value. That is, the data packets of the M data streams may be transmitted through the fixed bandwidth.

**In another possible implementation of the first aspect,** the communication interface includes a time division multiplexing TDM interface.

In this embodiment of this application, the communication interface of the first electronic device includes the TDM interface. The TDM interface is featured in simplicity and efficiency and a fixed rate, and can simply and efficiently transmit data of one or more data streams.

**According to a second aspect,** an embodiment of this application provides a data transmission method. The method is applied to a second electronic device, the second electronic device includes a communication interface, the communication interface is configured to receive to-be-processed data packets of M data streams, M is an integer greater than or equal to 1, and the method includes:
receiving M to-be-processed data packets; and
processing the M to-be-processed data packets, where
a first to-be-processed data packet in the M to-be-processed data packets belongs to a first data stream, the first to-be-processed data packet includes indication information and load information, the first data stream is one of the M data streams, a size of the first to-be-processed data packet is a first target value, the first target value is associated with a target bandwidth for transmitting the first data stream, the target bandwidth is less than or equal to a bandwidth of the communication interface, a size of the load information is a second target value, and the second target value is less than the first target value.

In this embodiment of this application, the communication interface of the second electronic device is at least configured to receive the to-be-processed data packets of the M data streams, and M is an integer greater than or equal to 1. The M to-be-processed data packets are in one-to-one correspondence with the M data streams, that is, the M to-be-processed data packets are the to-be-processed data packets of the M data streams. The first data stream in the M data streams is used as an example. The first to-be-processed data packet in the M to-be-processed data packets may belong to the first data stream, and the size of the first to-be-processed data packet is a fixed value. This is equivalent to that sizes of to-be-processed data packets belonging to the first data stream are all fixed values, that is, data of the first data stream is transmitted by using a fixed bandwidth. When the communication interface of the second electronic device receives to-be-processed data packets of a plurality of data streams, data of each data stream occupies a fixed bandwidth, which is equivalent to that data of the plurality of data streams may be received through one fixed-bandwidth communication interface.

**In a possible implementation of the second aspect,** a target data packet of the first data stream includes a valid bit in the load information.

In this embodiment of this application, the target data packet may be a data packet obtained after the to-be-processed data packet is decapsulated, and the target data packet includes the valid bit in the load information in the to-be-processed data packet.

**In another possible implementation of the second aspect,** the indication information includes first indication information, and the first indication information indicates a data stream type to which the first to-be-processed data packet belongs.

In this embodiment of this application, the indication information in the first to-be-processed data packet includes the first indication information, and the first indication information indicates the data stream type of the to-be-processed data packet, so that the second electronic device can easily identify the data stream type to which the first to-be-processed data packet belongs, and perform corresponding processing on the first to-be-processed data packet, for example, select, based on the data stream type, an unpacking method corresponding to the data stream type, and unpack the first to-be-processed data packet. For another example, the first to-be-processed data packet may be sent to a corresponding data transmission node based on the first indication information.

**In another possible implementation of the second aspect,** the indication information further includes second indication information, and the second indication information indicates a quantity of valid bits in the load information.

In this embodiment of this application, the indication information in the first to-be-processed data packet includes the second indication information, and the second indication information indicates the quantity of valid bits in the load information, so that the second electronic device can determine the valid bit in the first to-be-processed data packet based on the second indication information, to restore the target data packet of the first data stream.

**In another possible implementation of the second aspect,** the indication information includes third indication information, and the third indication information indicates a data stream identifier to which the first to-be-processed data packet belongs.

In this embodiment of this application, the indication information in the first to-be-processed data packet includes the third indication information, and the third indication information indicates the data stream of the to-be-processed data packet, so that the second electronic device can easily identify the data stream to which the first to-be-processed data packet belongs, and send data obtained by decapsulating the first to-be-processed data packet to a data transmission node corresponding to the data stream. In some scenarios, one data stream includes a plurality of pieces of data, and the data stream to which the to-be-sent data packet belongs cannot be determined based on only the first indication information. Therefore, the to-be-sent data packet cannot be placed on a correct data transmission node. The data stream type to which the to-be-sent data packet belongs is determined by using the first indication information, and then the data stream identifier to which the to-be-sent data packet belongs is determined based on the third indication information, so that the data stream to which the to-be-sent data packet belongs can be accurately obtained, and then the to-be-sent data packet can be transmitted through the correct data transmission node.

**In another possible implementation of the second aspect,** the communication interface includes a TDM interface.

In this embodiment of this application, the communication interface of the second electronic device includes the TDM interface. The TDM interface is featured in simplicity and efficiency and a fixed rate, and can simply and efficiently transmit data of one or more data streams.

According to a third aspect, an embodiment of this application provides a data transmission apparatus. The data transmission apparatus includes a module configured to perform any implementation in the first aspect or the second aspect.

According to a fourth aspect, an embodiment of this application provides a chip. The chip includes a processor. When the processor invokes a computer program or instructions, any implementation described in the first aspect or the second aspect is performed. That is, the processor is configured to implement any implementation described in the first aspect or the second aspect.

Optionally, the chip further includes a communication interface. The communication interface is configured to receive and/or send data, and/or the communication interface is configured to provide an input and/or output for the processor.

Optionally, the chip may further include a memory. The memory may be configured to store the computer program or the instructions. Further, the memory may be located outside the processor, or may be integrated with the memory.

According to a fifth aspect, an embodiment of this application further provides a terminal. The terminal includes the data transmission apparatus according to the third aspect.

Optionally, the terminal may be an intelligent terminal or a transportation means such as a vehicle, an uncrewed aerial vehicle, or a robot.

According to a sixth aspect, an embodiment of this application provides a data transmission system. The transmission system includes a first electronic device configured to perform any implementation in the first aspect and a second electronic device configured to perform any implementation in the second aspect.

According to a seventh aspect, an embodiment of this application provides a communication apparatus. The communication apparatus includes a processor and a storage medium, and the storage medium stores instructions; and when the instructions are run by the processor, any implementation in the first aspect or the second aspect is implemented.

According to an eighth aspect, an embodiment of this application provides a computer-readable storage medium. The computer-readable storage medium is configured to store instructions or a computer program; and when the instructions or the computer program is executed, any implementation described in the first aspect or the second aspect is implemented.

According to a ninth aspect, this application provides a computer program product. The computer program product includes computer instructions or a computer program; and when the instructions or the computer program is executed, any implementations described in the first aspect or the second aspect is implemented.

Optionally, the computer program product may be a software installation package or an image package. When the foregoing method needs to be used, the computer program product may be downloaded, and the computer program product is executed on a computing device.

For beneficial effect of the technical solutions provided in the third aspect to the ninth aspect of this application, refer to the beneficial effect of the technical solutions in the first aspect or the second aspect. Details are not described herein again.

### BRIEF DESCRIPTION OF DRAWINGS

To describe the technical solutions in embodiments of this application or in the background more clearly, the following briefly describes the accompanying drawings for describing embodiments of this application or the background.
FIG. 1 is a diagram of a multiplexing transmission technology according to an embodiment of this application;
FIG. 2 is a diagram of TDM data transmission according to an embodiment of this application;
FIG. 3 is a diagram of working of a first TDM interface according to an embodiment of this application;
FIG. 4 is a diagram of data transmission according to an embodiment of this application;
FIG. 5 is a diagram of an architecture of a data transmission system according to an embodiment of this application;
FIG. 6 is a diagram of a first scenario according to an embodiment of this application;
FIG. 7 is a diagram of a second scenario according to an embodiment of this application;
FIG. 8 is a diagram of a third scenario according to an embodiment of this application;
FIG. 9 is a schematic flowchart of a data transmission method according to an embodiment of this application;
FIG. 10 is a diagram of a data packet encapsulation format according to an embodiment of this application;
FIG. 11A is a diagram of a first type of data packet encapsulation according to an embodiment of this application;
FIG. 11B is a diagram of a second type of data packet encapsulation according to an embodiment of this application;
FIG. 12A is a diagram of a third type of data packet encapsulation according to an embodiment of this application;
FIG. 12B is a diagram of a fourth type of data packet encapsulation according to an embodiment of this application;
FIG. 13 is a diagram of a fifth type of data packet encapsulation according to an embodiment of this application;
FIG. 14 is a schematic flowchart of another data transmission method according to an embodiment of this application;
FIG. 15 is a diagram of processing of a data packet according to an embodiment of this application;
FIG. 16 and FIG. 17 are diagrams of processing of another data packet according to an embodiment of this application;
FIG. 18 is a diagram of a structure of a signal transmitting apparatus according to an embodiment of this application;
FIG. 19 is a diagram of a structure of a signal receiving apparatus according to an embodiment of this application;
FIG. 20 is a diagram of a structure of another possible signal transmitting apparatus according to an embodiment of this application; and
FIG. 21 is a diagram of a structure of another possible signal receiving apparatus according to an embodiment of this application.

### DESCRIPTION OF EMBODIMENTS

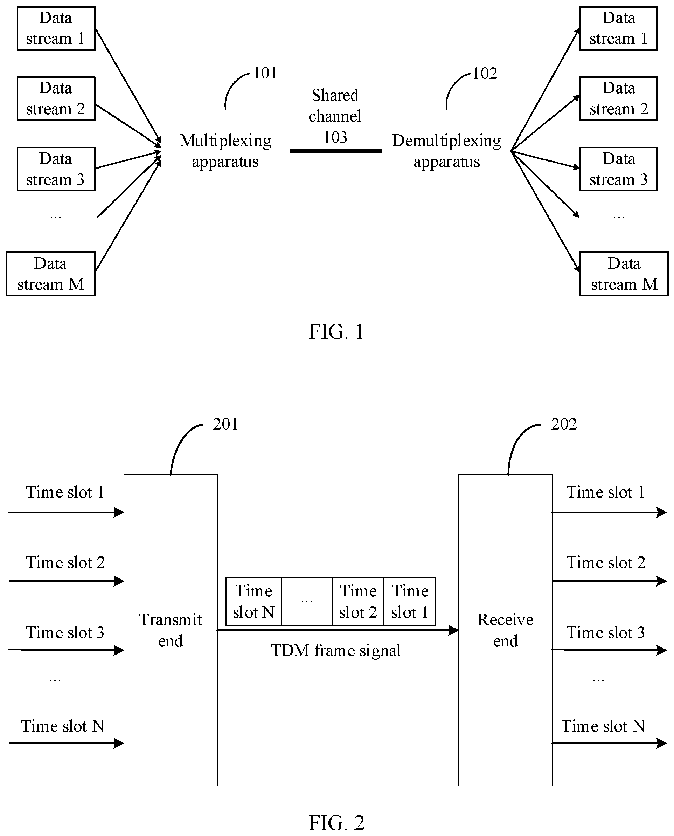

With development of communication technologies, various data transmission methods provide solutions for flexible, efficient, and fast data transmission. A multiplexing technology can effectively improve utilization of a data link and reduce data transmission costs, and is widely applied. The multiplexing technology is essentially a data transmission manner in which a multiplexing apparatus aggregates data of a plurality of data streams, and then transmits the aggregated data through one shared channel, and a demultiplexing apparatus separates the data, and distributes the data to data transmission nodes of the plurality of data streams. For example, FIG. 1 is a diagram of a multiplexing transmission technology. A multiplexing apparatus 101 can aggregate data of M data streams to form one data stream, where M is an integer greater than or equal to 1. The aggregated data stream is transmitted to a demultiplexing apparatus 102 through a shared channel 103, and the demultiplexing apparatus 102 can split the data and distribute the data to the M data streams at a receive end. It should be noted that a plurality of data streams may belong to a same data stream type. One electronic device may generate/receive a plurality of data streams, or may generate/receive only one data stream. This is not limited in embodiments of this application. The shared channel 103 may be a wired channel or a wireless channel. This is also not limited in embodiments of this application.

However, different data streams have different data stream requirements, hardware devices that generate data, transmission protocols, and the like. As a result, sizes of data packets used by different data streams are also different. In addition, even for data streams of a same type, sizes of data packets used to carry data may be different (where the data streams of a same type are referred to as variable-rate data streams). For example, for a compressed video H.264/H.265 bitstream, sizes of data packets thereof may be different. If a fixed-bandwidth interface, for example, a wired TDM interface, is used to transmit a plurality of data streams or a variable-rate data stream, a phenomenon that a data transmission error occurs or transmission cannot be performed may be caused. How to use one fixed-bandwidth interface to transmit data packets of a plurality of data streams or a data packet of a variable-rate data stream is an urgent problem to be resolved currently.

**The following describes the method in this application with reference to the accompanying drawings.**

FIG. 2 is a diagram of TDM data transmission according to an embodiment of this application. As shown in FIG. 2, a transmit end 201 and a receive end 202 are included. The transmit end 201 is configured to aggregate a plurality of signals to form a TDM frame signal, and send the TDM frame signal. The receive end 202 is configured to receive the TDM frame signal, and split the TDM frame signal to form the plurality of signals. Specifically, as shown in FIG. 2, the TDM frame signal includes signals carried in N time slots, and N is an integer greater than or equal to 1. The transmit end 201 summarizes data carried in a time slot 1, a time slot 2, a time slot 3, ..., and a time slot N to form the TDM frame signal. It may be learned from FIG. 2 that the time slot 1, the time slot 2, the time slot 3, ..., and the time slot N are sequentially arranged from right to left to form the TDM frame signal. After receiving the TDM frame signal, the receive end 202 splits the TDM frame signal, and sequentially obtains the data carried in the time slot 1, the time slot 2, the time slot 3, ..., and the time slot N. It should be noted that the TDM frame signal may include an indication signal, indicating signal synchronization and the like. For example, a frame synchronization signal identifies start and end of one target transmission periodicity.

In addition, for ease of description of the solution, an example in which one or more time slots are included in a TDM transmission periodicity is used in all subsequent descriptions, to describe the solution. In an understanding process of the solution, impact of indication information on the solution does not need to be considered. However, in an implementation process of the solution, it should not be considered that the TDM frame signal provided in this application includes only one or more time slots.

For example, in a process of describing a TDM frame in this embodiment of this application, a time slot in the TDM frame may be described. Another part (for example, a frame synchronization signal) in the TDM frame is not specifically limited in this embodiment of this application.

In some scenarios, sizes of the N time slots are equal, to be specific, time occupied by any one of the N time slots is equal to 1/N of time occupied by one frame of TDM signal (referred to as one target transmission periodicity). The N time slots carry data of N data streams, to be specific, each time slot carries data of one data stream, and the data streams carried in the N time slots are different. For example, the time slot 1 carries data of a data stream 1, the time slot 2 carries data of a data stream 2, the time slot 3 carries data of a data stream 3, ..., and the time slot N carries data of a data stream N. The data stream 1, the data stream 2, the data stream 3, ..., and the data stream N are different from each other.

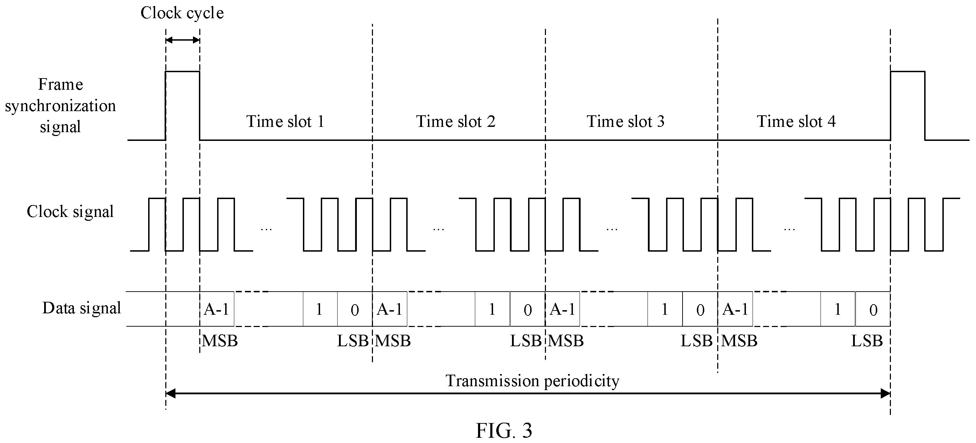

For example, FIG. 3 is a diagram of working of a first TDM interface according to an embodiment of this application. FIG. 3 is used to show a case in which sizes of time slots are the same in one target transmission periodicity. One target transmission periodicity may be duration occupied by one frame of TDM signal, and sizes of time slots being the same may mean that data amounts carried in the time slots are the same. In some possible scenarios, the sizes of the time slots being the same may alternatively mean that data amounts to be carried/sent are the same, and may be not related to data transmission time. For example, a time slot 1 and a time slot 2 may mean that both data amounts to be carried/sent are 5 KB, where time occupied by the time slot 1 is 3 ms, and time occupied by the time slot 2 is 5 ms (a case in which the time occupied by the time slot 1 and the time occupied by the time slot 2 are different); or both time occupied by the time slot 1 and time occupied by the time slot 2 are 4 ms (a case in which the time occupied by the time slot 1 and the time occupied by the time slot 2 are the same). In some other possible scenarios, the sizes of the time slots being the same may alternatively mean that data transmission time is the same, and may be not related to a data amount to be carried/sent. For example, both time occupied by a time slot 1 and time occupied by a time slot 2 are 4 ms, where a data amount to be carried/sent in the time slot 1 is 5 KB, and a data amount to be carried/sent in the time slot 2 is 8 KB (a case in which the data amount to be carried/sent in the time slot 1 and the data amount to be carried/sent in the time slot 2 are different); or both a data amount to be carried/sent in the time slot 1 and a data amount to be carried/sent in the time slot 2 are 8 KB (a case in which the data amount to be carried/sent in the time slot 1 and the data amount to be carried/sent in the time slot 2 are the same).

As shown in FIG. 3, a clock signal, a frame synchronization signal, and a data signal are included in FIG. 3. The clock signal may be used to determine a transmission rate and a time sequence of data. Only one data bit (for example, 0 or 1) can be transmitted in one clock cycle. One time slot includes A clock cycles, and A is an integer greater than or equal to 1. A equal to 16 is used as an example. It indicates that the time slot 1, the time slot 2, a time slot 3, and a time slot 4 shown in FIG. 3 each include 16 clock cycles, which is equivalent to that each time slot may carry 16 data bits. The transmit end sequentially pads data bits in each time slot based on the clock cycles, and the receive end parses and restores, based on the clock signal, data carried in the time slot.

The frame synchronization signal identifies start and end of one target transmission periodicity. As shown in FIG. 3, in a start phase of the target transmission periodicity, the frame synchronization signal is adjusted from a low level to a high level, and duration occupied by the high level is one clock cycle. Then, the frame synchronization signal is restored to the original low level, and until a next target transmission periodicity starts, the frame synchronization signal is adjusted from the low level to the high level.

The data signal indicates bit quantization of an audio data sample through a level jump.

It may be learned from FIG. 3 that the frame synchronization signal and one or more time slots used to carry data jointly form one target transmission periodicity. For ease of description, an example in which one target transmission periodicity includes one or more time slots is used in all subsequent descriptions for related descriptions.

FIG. 3 shows a case in which a plurality of data streams are transmitted at a same rate through a TDM interface. However, usually, data transmission rates required by data streams are different. For example, a bandwidth required by a data stream 1 is 5 MB/s, a bandwidth required by a data stream 2 is 10 MB/s, and a bandwidth required by a data stream 3 is 15 MB/s. If data of the data stream 1, data of the data stream 2, and data of the data stream 3 are transmitted at a same rate, a phenomenon such as data congestion or low bandwidth utilization may be caused.

In view of this, embodiments of this application provide a data transmission method, so that one data stream can occupy a plurality of time slots for data transmission. A communication interface can meet a transmission requirement of each data stream by properly allocating a time slot to the data stream, so that a possible data congestion problem that may occur can be resolved, and bandwidth utilization can also be improved. For example, the time slot may be allocated to the data stream based on a requirement of the data stream, or the time slot may be allocated to the data stream based on an allocable bandwidth of the communication interface. For a specific implementation process, refer to subsequent descriptions. Details are not described herein. Similarly, allocating the time slot to the data stream may also be understood as matching a corresponding slot based on a transmission requirement of the data stream. For example, the slot may be a time unit for data transmission. For example, the slot may be one or more time slots. For another example, the slot may alternatively be time of a target length. For example, a size of the slot is 5 ms or 10 ms. This is not limited in embodiments of this application.

In some scenarios, a time slot that can be used may be allocated to a data stream at a granularity of a time slot based on a requirement of the data stream. Alternatively, a time slot that can be used may be allocated to a data stream at a granularity of a time slot based on the time slot that can be allocated to the TDM interface. A specific quantity of time slots allocated to the data stream and a size of each time slot both are not limited in embodiments of this application.

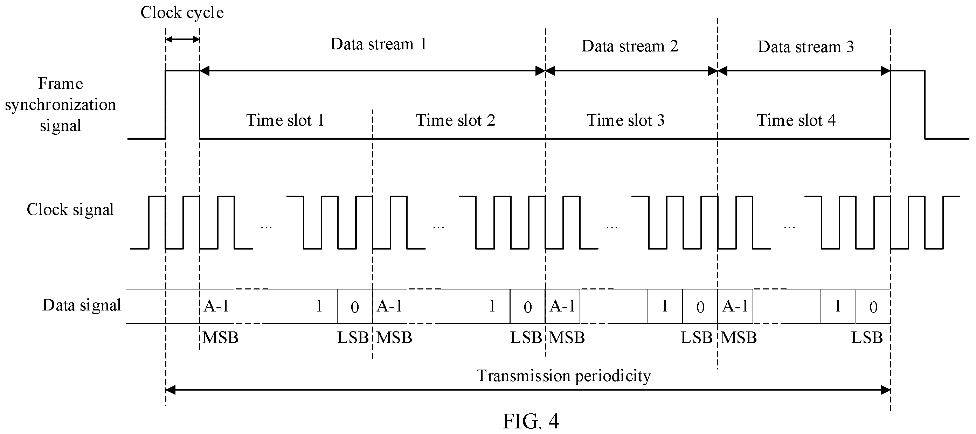

For example, FIG. 4 is a diagram of data transmission according to an embodiment of this application. FIG. 4 is used to show a case in which quantities of time slots allocated to different data streams are different in one target transmission periodicity.

Similar to FIG. 3, FIG. 4 includes a clock signal, a frame synchronization signal, and a data signal. For specific descriptions of the clock signal, the frame synchronization signal, and the data signal, refer to related descriptions in FIG. 3. Details are not described herein again.

In addition, FIG. 4 further includes a data stream 1, a data stream 2, and a data stream 3. The data stream 1 occupies a time slot 1 and a time slot 2, the data stream 2 occupies a time slot 3, and the data stream 3 occupies a time slot 4. This is equivalent to that a size of a first data packet corresponding to the data stream 2 is equal to a size of a first data packet corresponding to the data stream 3, and a size of a first data packet corresponding to the data stream 1 is equal to twice the size of the first data packet corresponding to the data stream 2 or the size of the first data packet corresponding to the data stream 3.

In a possible implementation, the time slot allocated to the data stream may be determined based on a requirement of the data stream.

The requirement of the data stream is a requirement of the data stream for a data transmission rate, or may be a minimum requirement for transmitting data of the data stream, or may be an optimal requirement for transmitting data of the data stream. This is not limited in embodiments of this application. For example, a minimum bandwidth for transmitting data of the data stream 1 is 5 MB/s, and an optimal bandwidth for transmitting the data of the data stream 1 may be 7 MB/s. The minimum requirement for transmitting the data of the data stream may be an average rate required for transmitting the data stream, or may be slightly higher than the average rate. The optimal requirement for transmitting the data of the data stream may be a maximum data transmission rate of the data stream. For a fixed-rate data stream, a data transmission rate required at each moment is a fixed value. Usually, a "minimum requirement" and an "optimal requirement" of the fixed-rate data stream are the same. For a variable-rate data stream, a data transmission rate required at each moment is not fixed. For example, a rate at a first moment is required to be 3 MB/s, and a rate at a second moment is required to be 7 MB/s. If an average data transmission rate required by the variable-rate data stream is 5 MB/s, a corresponding "minimum requirement" is 5 MB/s. If a maximum data transmission rate required by the variable-rate data stream is 7 MB/s, a corresponding "optimal requirement" may be 7 MB/s.

When the TDM interface transmits one data stream, a parameter of the TDM interface may be determined based on the foregoing "minimum requirement" or "optimal requirement", so that a bandwidth of the TDM interface can meet the "minimum requirement" or "optimal requirement" of the data stream.

When the TDM interface transmits a plurality of data streams, the parameter of the TDM interface may also be determined based on the foregoing "minimum requirement" or "optimal requirement", so that the bandwidth of the TDM interface can meet a sum of bandwidths required by the plurality of data streams, and the bandwidths can be allocated based on requirements of the data streams. For example, a sum of bandwidths required by the data stream 1, the data stream 2, and the data stream 3 is 10 MB/s, where the bandwidth required by the data stream 1 is 5 Mb/s, the bandwidth required by the data stream 2 is 2.5 MB/s, and the bandwidth required by the data stream 3 is also 2.5 MB/s.

Further, a time slot occupied by the data stream may be determined based on the bandwidth allocated to the data stream. For example, the time slot may be considered as a sub-interface having a fixed bandwidth. For example, the bandwidth of the time slot may be equal to the bandwidth of the TDM interface divided by a quantity of time slots, or the bandwidth of the time slot is equal to a quantization bit width of one time slot multiplied by a sampling frequency of the TDM interface. For example, the time slot may be allocated to the data stream at a granularity of the time slot. For example, a bandwidth of one time slot is 0.6 MB/s, nine time slots (9×0.6=5.4 MB/s) need to be allocated to the data stream 1, and five time slots (5×0.6=3 MB/s) need to be allocated to the data stream 2 or the data stream 3, so that the bandwidths required by the data stream 1, the data stream 2, and the data stream can be met.

In another possible implementation, the time slot allocated to the data stream may be determined based on an allocable bandwidth of the TDM interface.

The allocable bandwidth of the TDM interface may also be the bandwidth of the TDM interface. For example, a sampling frequency of the TDM interface is 48 kHz, eight time slots are included, and a quantization bit width of each time slot is 8 bits. In this case, a data amount transmitted by the TDM interface per unit time is 8×8×48K=3072000 bits=384000 bytes=375 KB, that is, the bandwidth of the TDM interface is 375 KB/s.

In some scenarios, the bandwidth of the TDM interface cannot be adjusted. For example, the bandwidth cannot be increased or decreased. However, the bandwidth required by the data stream is not equal to the bandwidth of the TDM interface. In this case, the bandwidth required by the data stream cannot be exactly allocated (where the bandwidth allocated to the data stream may be more or less than the requirement of the data stream).

In a possible implementation, the bandwidth may be proportionally allocated.

For example, the bandwidth required by data stream 1 is 5 MB/s, the bandwidth required by data stream 2 is 2.5 MB/s, the bandwidth required by data stream 3 is also 2.5 MB/s, and the TDM interface bandwidth is 20 MB/s. In this case, the bandwidths may be allocated to the three data streams in a ratio of 2:1:1. For example, a bandwidth of 10 MB/s is allocated to the data stream 1, and a bandwidth of 5 Mb/s is allocated to the data stream 2 or the data stream 3.

It may be learned from FIG. 4 that the frame synchronization signal and one or more time slots used to carry data jointly form one target transmission periodicity. For ease of description, an example in which one target transmission periodicity includes one or more time slots is used in all subsequent descriptions for related descriptions.

In FIG. 3 and FIG. 4, an LSB (least significant bit) represents a low bit of data, and an MSB (most significant bit) represents a high bit of the data. In one time slot, a low bit of data may be located on the right side of a high bit of the data.

It may be understood that the size of the time slot is positively correlated with a quantity of bits that can be carried in the time slot. Usually, one data stream occupies a fixed quantity of bits in one frame of TDM signal, and a quantity of bits carried in one frame of TDM signal is also fixed, that is, a TDM data transmission rate is fixed. When the TDM interface transmits one data stream, if the data stream is a variable-rate data stream (that is, a size of a data packet is not fixed), the data packet of the variable-rate data stream needs to be encapsulated, and adjusted to a data packet whose size is a first target value, and the first target value is a quantity of bits carried by one frame of TDM signal. When the TDM interface transmits a plurality of data streams, a data packet of each data stream needs to be encapsulated into a data packet whose size is a first target value, and the first target value is related to a quantity of time slots allocated to the data stream. A first data stream in the plurality of data streams is used as an example. Two time slots are allocated to the first data stream, and a quantity of bits that can be carried in one time slot is 10 bits. In this case, the first target value is 20 bits.

**The following describes embodiments of this application with reference to the accompanying drawings.**

The following describes a system architecture in embodiments of this application. It should be noted that the system architecture and a scenario described in this application are intended to describe technical solutions in this application more clearly, and do not constitute a limitation on the technical solutions provided in this application. It should be understood that with evolution of the system architecture and emergence of a new scenario, the technical solutions provided in this application are also applicable to similar technical problems.

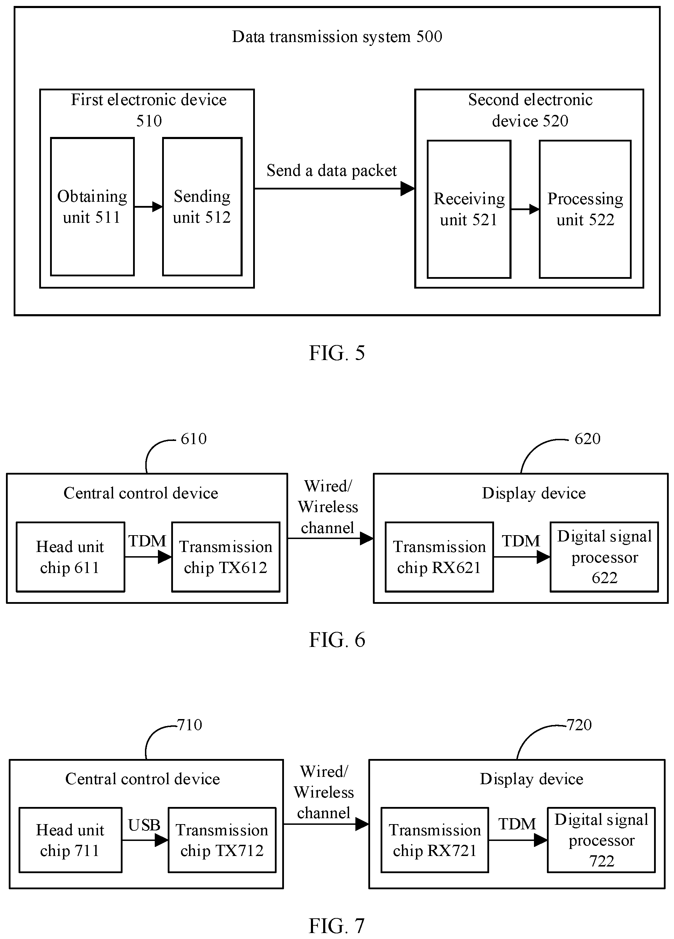

FIG. 5 is a diagram of an architecture of a data transmission system according to an embodiment of this application. The data transmission system 500 includes a first electronic device 510 and a second electronic device 520.

The first electronic device 510 includes an obtaining unit 511 and a sending unit 512. The obtaining unit 511 and the sending unit 512 may be connected. The obtaining unit 511 is configured to obtain to-be-sent data or a to-be-sent data packet, and the sending unit 512 is configured to send the data or the data packet.

The obtaining unit 511 has a computing capability. For example, the obtaining unit 511 can determine information such as a size and a packet assembly format of the to-be-sent data packet and a sending sequence of the to-be-sent data packet, and provide the information such as the to-be-sent data packet and the sending sequence of the data packet for the sending unit 512. The size of the to-be-sent data packet may be a quantity of bits occupied by the to-be-sent data packet, and the size of the to-be-sent data packet may be related to a data amount that can be sent by the sending unit 512 at a time. The packet assembly format of the to-be-sent data packet indicates a location, a size, and the like of indication information and data information in the to-be-sent data packet. The obtaining unit 511 may determine the to-be-sent data packet based on the size and the packet assembly format of the to-be-sent data packet. When the obtaining unit 511 determines a plurality of to-be-sent data packets, a sending sequence of the sending unit 512 is indicated by using a sending sequence of the to-be-sent data packets, so that a receive end of the data packets correctly restores original information.

It may be understood that the to-be-sent data packet may be a data packet obtained after encapsulation, namely, a data packet whose size is a first target value.

Optionally, the obtaining unit 511 may be implemented by hardware or software. For example, the obtaining unit 511 may be implemented through a general-purpose processor, for example, a central processing unit (Central Processing Unit, CPU) or a microprocessor. Alternatively, the obtaining unit 511 may be implemented in a form of a hardware circuit, and functions of a part or all of the units completed by the obtaining unit 511 are implemented by designing the hardware circuit. For example, in an implementation, the hardware circuit is an application-specific integrated circuit (application-specific integrated circuit, ASIC), and functions of a part or all of the foregoing units are implemented by designing a logical relationship between elements in the circuit. For another example, in another implementation, the hardware circuit may be implemented through a programmable logic device (programmable logic device, PLD). For example, a field programmable gate array (Field Programmable Gate Array, FPGA) may include a large quantity of logic gate circuits, and a connection relationship between the logic gate circuits is configured by using a configuration file, to implement functions of a part or all of the foregoing units.

In a possible example, the obtaining unit 511 can process data from a plurality of data streams. For example, the obtaining unit 511 can sequentially generate a plurality of corresponding data packets based on the data of the plurality of data streams. For example, a first data packet, a second data packet, and a third data packet are sequentially generated based on data of a first data stream, data of a second data stream, and data of a third data stream. The first data stream, the second data stream, and the third data stream all belong to the plurality of data streams, and the first data packet, the second data packet, and the third data packet all belong to the plurality of data packets. In addition, the obtaining unit 511 may further generate the plurality of data packets in parallel based on the data of plurality of data streams, or can simultaneously process data of two or more data streams.

The sending unit 512 is configured to send a signal. In a possible example, the sending unit 512 may include a signal transmitter, a modulator, and a transmit antenna, and optionally further include an amplifier and the like. The signal generator (for example, a voltage-controlled oscillator) may generate an electromagnetic-wave signal (also referred to as a radar signal waveform). For example, for a radar using an FMCW modulation scheme, the signal transmitter may generate a sawtooth wave or a triangular wave. A waveform of the generated electromagnetic-wave signal undergoes frequency conversion and modulation processing, and is modulated to a specific frequency band (for example, between 77 GHz and 78 GHz) and is radiated to space through the transmit antenna.

In another possible example, the sending unit 512 further supports a multiplexing technology, and can send, in a multiplexing manner, the plurality of to-be-sent data packets determined by the obtaining unit 511. The multiplexing technology that can be supported includes TDM, FDM, WDM, CDMA, SDMA, and the like. A specific multiplexing technology to be used is not limited in embodiments of this application.

In another possible example, the sending unit 512 further supports wired transmission. For example, data may be transmitted by using one or more of the following transmission media, including a twisted pair, a coaxial cable, an optical fiber, and the like.

The second electronic device 520 includes a receiving unit 521 and a processing unit 522, and the receiving unit 521 and the processing unit 522 may be connected. The receiving unit 521 is configured to receive data or a data packet sent by the first electronic device 510. The processing unit 522 is configured to process the received data or data packet, for example, perform operations such as unpacking, distribution, and data restoration.

The receiving unit 521 is used to receive a signal. In a possible example, the receiving unit 521 may include a signal receiver, a demodulator, and a receive antenna, and optionally further include a low noise amplifier and the like. The signal receiver can receive a radio frequency signal (for example, between 77 GHz and 78 GHz) through the receive antenna, perform frequency mixing on the received radio frequency signal and an electromagnetic wave signal generated by a local oscillator (for example, a voltage-controlled oscillator), and demodulate them to obtain an intermediate frequency signal or a baseband signal. Alternatively, the intermediate frequency signal or the baseband signal may be demodulated through the demodulator to restore an original signal.

In another possible example, the receiving unit 521 further supports a multiplexing technology; and can demultiplex a received signal, restore one or more original data streams, and send the restored data streams to a corresponding terminal. The multiplexing technology that can be supported by the receiving unit 521 includes TDM, FDM, WDM, CDMA, SDMA, and the like. A specific multiplexing technology to be used is not limited in embodiments of this application.

In another possible example, the receiving unit 521 further supports receiving a signal in a wired transmission manner. For example, data may be received by using one or more of the following transmission media, including a twisted pair, a coaxial cable, an optical fiber, and the like.

The processing unit 522 has a computing capability. In a possible implementation, the processing unit 522 can perform operations such as unpacking or forwarding on the data stream received by the receiving unit 521. For example, the receiving unit 521 receives a TDM data packet, and the processing unit 522 can unpack the TDM data packet to obtain data of a plurality of data streams. The processing unit 522 can further forward the obtained data of the plurality of data streams to a corresponding device. In another possible implementation, the processing unit 522 can further parse and use the data received by the receiving unit 521. For example, the processing unit 522 is a display device, and the processing unit 522 can display an image based on the data received by the receiving unit 521. For another example, the processing unit 522 is a display device, and the processing unit 522 can play a sound based on the data received by the receiving unit 521.

Optionally, the processing unit 522 may be implemented by hardware or software. For example, for specific implementation of the processing unit 522 by hardware or software, refer to specific implementation of the obtaining unit 511. Details are not described herein again.

The foregoing separately describes the built-in units of the first electronic device 510 and the second electronic device 520 by using examples. The following provides appropriate examples for the first electronic device 510 and the second electronic device 520. The first electronic device 510 has a data packet obtaining capability and a data packet sending capability, for example, may be a head unit chip, a camera, or an ultrasonic radar. The second electronic device 520 has a data packet receiving capability and a data packet processing capability, for example, may be a digital signal processor (digital signal processor, DSP), a display, or a display device.

The first electronic device 510 sending a data packet to the second electronic device 520 may directly send the data packet to the second electronic device 520 in a wired or wireless manner, or may send the data packet to the second electronic device 520 through a plurality of relay devices. It should be noted that the plurality of relay devices may not change a format of the data packet, for example, unpack, delete, or add a new data packet, but perform only a forwarding operation on the data packet. The relay device may also forward the data packet in a wired or wireless manner. A quantity of relay devices is also not limited in embodiments of this application. It should be noted that the relay device connected to the first electronic device 510 can receive the data packet of the sending unit 512. For example, the sending unit 512 sends data through a fixed-rate interface, and the relay device also receives the data through the fixed-rate interface. For another example, the sending unit 512 sends the data by using a TDM technology, and the relay device needs to be capable of supporting data receiving by using the TDM technology.

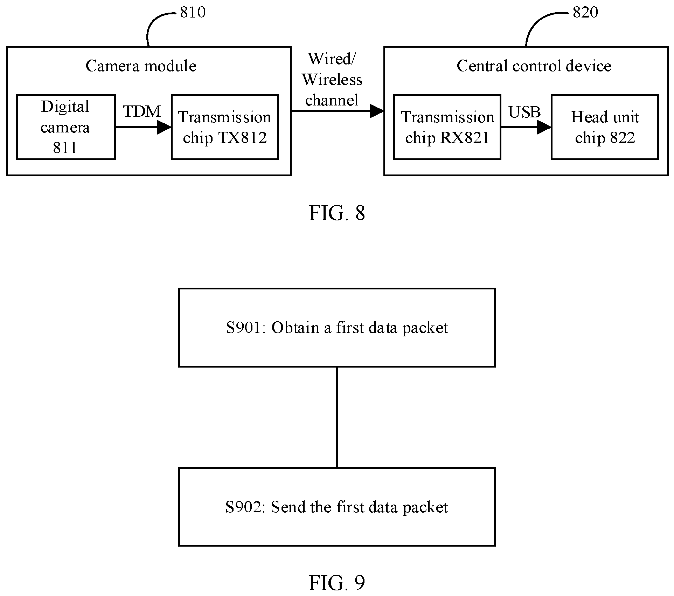

The following describes possible implementations of the data transmission system 500 by using examples with reference to FIG. 6 to FIG. 8. In FIG. 6 and FIG. 7, an application scenario in which a central control device in an intelligent vehicle sends data to a display device is used as an example for description. In FIG. 8, an application scenario in which a camera module in an intelligent vehicle sends data to a central control device is used as an example for description. It should be noted that the technical solutions provided in this application are not limited to the application scenario of the intelligent vehicle, and all scenarios that meet the system architecture in FIG. 5 fall within the protection scope of embodiments of this application, for example, scenarios of smart home, smart community, smart agriculture, and the like.

FIG. 6 is a diagram of a first scenario according to an embodiment of this application. A central control device 610 and a display device 620 are included. The central control device 610 includes a head unit chip 611 and a transmission chip TX612, and the display device 620 includes a transmission chip RX621 and a DSP 622.

The head unit chip 611 is configured to obtain a to-be-sent data packet of one data stream or to-be-sent data packets of a plurality of data streams, and send the to-be-sent data packet through a TDM interface. When the head unit chip 611 is configured to obtain the to-be-sent data packet of the one data stream, a size of the to-be-sent data packet may be equal to a quantity of bits that can be carried in one target transmission periodicity. When the head unit chip 611 is configured to obtain the to-be-sent data packets of the plurality of data streams, a sum of the to-be-sent data packets of the plurality of data streams may be equal to a quantity of bits that can be carried in one target transmission periodicity. A type of the one data stream or types of the plurality of data streams are not limited in embodiments of this application, for example, may be audio, video, braking control, or motor control. For descriptions of how the head unit chip 611 obtains the to-be-sent data packet of the one data stream or the to-be-sent data packets of the plurality of data streams, refer to subsequent related content. Details are not described herein.

The transmission chip TX612 can receive the to-be-sent data packet, and forward the received to-be-sent data packet. For example, the transmission chip TX612 can receive the to-be-sent data packet from the head unit chip 611, and forward the to-be-sent data packet. For another example, the transmission chip TX612 can receive the to-be-sent data packet from the head unit chip 611 through the TDM interface, and forward the to-be-sent data packet. In some implementations, the transmission chip TX612 can forward the received data packet through a wired channel. For example, the transmission chip TX612 forwards the received data packet in a manner of a twisted pair, a coaxial cable, an optical fiber, or the like. In another implementation, the transmission chip TX612 can alternatively forward the received data packet through a wireless channel. A frequency band of the wireless channel is not limited in embodiments of this application, for example, may be between 77 GHz and 78 GHz.

The transmission chip RX621 is configured to receive the data packet, and then forward the received data packet. For example, the transmission chip RX621 receives the data packet from the central control device 610, and forwards the data packet. For another example, the transmission chip RX621 receives the data packet from the central control device 610, and forwards the data packet through a fixed-rate interface. In an implementation, the transmission chip RX621 does not perform any processing on the received data packet, and directly forwards the data packet through the TDM interface. In another implementation, the transmission chip RX621 first preprocesses the received data packet, for example, may perform operations such as demultiplexing, and then forwards the data packet obtained through preprocessing through the TDM interface. The data packet obtained through demultiplexing may be forwarded to one electronic device, or the data packet obtained through demultiplexing may be forwarded to a plurality of electronic devices. For example, when all data packets received by the transmission chip RX621 belong to one data stream, the received data packets may be forwarded to an electronic device that executes the data stream. For another example, when the data packets received by the transmission chip RX621 belong to a plurality of data streams, and the plurality of data streams are executed by a plurality of different electronic devices, the received data packets may be distributed to the plurality of different electronic devices. For another example, when the data packets received by the transmission chip RX621 belongs to a plurality of data streams, and the plurality of data streams are all executed by one electronic device, the received data packets may be forwarded to the electronic device.

A digital signal processor (digital signal processing, DSP) 622 is configured to receive data, and process the received data. For example, the DSP 622 may receive the data packet from the transmission chip RX621, and process the received data packet. For another example, the DSP 622 may receive the data packet from the transmission chip RX621 through the fixed-rate interface (for example, the TDM interface), and process the received data packet. A manner of processing the data packet by the DSP 622 includes but is not limited to operations such as unpacking, restoring an original data sequence, and using valid data in the data packet.

In a possible implementation, the data obtained through processing by the DSP 622 may be sent to a display screen of the display device 620, and the display screen can display a picture based on the data obtained through processing by the DSP 622.

It may be learned from the foregoing descriptions in FIG. 6 that the head unit chip 611 has functions of obtaining the data packet and sending the data packet through the fixed-rate interface, and the DSP 622 has functions of receiving the data packet through the fixed-rate interface and processing the data packet. Therefore, the head unit chip 611 may be considered as the first electronic device 510 in FIG. 5, and the DSP 622 may be considered as the second electronic device 520 in FIG. 5. Both the transmission chip TX612 and the transmission chip RX621 in FIG. 6 may be considered as relay devices, and are configured to forward signals of the head unit chip 611. In the foregoing descriptions in FIG. 5, more or fewer relay devices may be included between the first electronic device 510 and the second electronic device 520, and are configured to forward functions of the first electronic device 510. Therefore, more or fewer relay devices may be included between the head unit chip 611 and the DSP 622. This is not limited in this application.

FIG. 7 is a diagram of a second scenario according to an embodiment of this application. A central control device 710 and a display device 720 are included. The central control device 710 includes a head unit chip 711 and a transmission chip TX712, and the display device 720 includes a transmission chip RX721 and a DSP 722.

A difference between FIG. 7 and FIG. 6 lies in that the head unit chip 711 and the transmission chip TX712 in FIG. 7 transmit data through a non-fixed-rate interface (for example, a USB interface), and the head unit chip 611 and the transmission chip TX612 in FIG. 6 transmit the data through the fixed-rate interface (for example, the TDM interface).

The head unit chip 711 is configured to obtain a to-be-sent data packet of one data stream or to-be-sent data packets of a plurality of data streams, and send the to-be-sent data packet through the USB interface. It should be noted that the interface used by the head unit chip 711 to send the data is not a TDM interface. For example, the head unit chip 711 may alternatively be a serial peripheral interface (serial peripheral interface, SPI), a thunderbolt interface (thunderbolt), a high definition multimedia interface (high definition multimedia interface, HDMI), or the like. A type of the one data stream or types of the plurality of data streams are not limited in embodiments of this application, for example, may be audio, video, braking control, or motor control. For descriptions of how the head unit chip 711 obtains the to-be-sent data packet of the one data stream or the to-be-sent data packets of the plurality of data streams, refer to subsequent related content. Details are not described herein.

The transmission chip TX712 can receive the to-be-sent data packet, and forward the received to-be-sent data packet. For example, the transmission chip TX712 can receive the to-be-sent data packet from the head unit chip 711, and forward the to-be-sent data packet. For another example, the transmission chip TX712 can receive the to-be-sent data packet from the head unit chip 711 through the USB interface, and forward the to-be-sent data packet. In some implementations, the transmission chip TX712 can forward the received data packet through a wired channel. For example, the transmission chip TX712 forwards the received data packet in a manner of a twisted pair, a coaxial cable, an optical fiber, or the like. In another implementation, the transmission chip TX712 can alternatively forward the received data packet through a wireless channel. A frequency band of the wireless channel or the like is not limited in embodiments of this application, for example, may be between 77 GHz and 78 GHz.

The transmission chip RX721 is configured to receive the data packet, and then forward the received data packet. For example, the transmission chip RX721 receives the data packet from the central control device 710, and forwards the data packet. For another example, the transmission chip RX721 receives the data packet from the central control device 710, and forwards the data packet through a TDM interface. Because the head unit chip 711 does not send the data packet to the transmission chip TX712 through the TDM interface, the data packet received by the transmission chip RX721 through a wired/wireless channel usually cannot be directly forwarded through a fixed-rate interface, and the transmission chip RX721 needs to first encapsulate the received data packet into a data packet that can be transmitted (which is equivalent to obtaining the data packet) through the fixed-rate interface (for example, the TDM interface), and then send the data packet through the fixed-rate interface (for example, the TDM interface). For descriptions of how to encapsulate the received data packet, so that the data packet can be transmitted through the fixed-rate interface (for example, the TDM interface), refer to subsequent descriptions of related content. Details are not described herein.

The DSP 722 is configured to receive data, and process the received data. For example, the DSP 722 may receive the data packet from the transmission chip RX721, and process the received data packet and then display the processed data packet on the screen. For another example, the DSP 722 may receive the data packet from the transmission chip RX721 through the fixed-rate interface (for example, the TDM interface), and process the received data packet. A manner of processing the data packet by the DSP 722 includes but is not limited to operations such as unpacking, restoring an original data sequence, and using valid data in the data packet.

It may be learned from the foregoing descriptions in FIG. 7 that the transmission chip RX721 has functions of obtaining the data packet and sending the data packet through the fixed-rate interface (for example, the TDM interface), and the DSP 722 has functions of receiving the data packet and processing the data packet through the fixed-rate interface (for example, the TDM interface). Therefore, the transmission chip RX721 may be considered as the first electronic device 510 in FIG. 5, and the DSP 722 may be considered as the second electronic device 520 in FIG. 5. In addition, both the transmission chip RX721 and the DSP 722 belong to the display device 720, and data transmission between the transmission chip RX721 and the DSP 722 may be considered as direct data transmission. For example, the transmission chip RX721 and the DSP 722 perform data transmission in an on-chip routing manner.

In a possible implementation, the data obtained through processing by the DSP 722 may be sent to a display screen of the display device 720, and the display screen can display a picture based on the data obtained through processing by the DSP 722.

FIG. 8 is a diagram of a third scenario according to an embodiment of this application. A camera module 810 and a central control device 820 are included. The camera module 810 includes a digital camera 811 and a transmission chip TX812, and the central control device 820 includes a transmission chip RX821 and a head unit chip 822.

The digital camera 811 is configured to obtain data, and send the obtained data through a fixed-rate interface (for example, a TDM interface). For example, the digital camera 811 is configured to obtain audio and/or video data, and send the obtained data through the fixed-rate interface (for example, the TDM interface). It should be noted that the data obtained by the digital camera 811 is not directly encapsulated into a format of a data packet that can be sent through the fixed-rate interface (for example, the TDM interface). For example, the digital camera 811 needs to first perform H.264/H.265 coding, and then encapsulate a data packet obtained through coding, to generate the data packet that can be sent through the fixed-rate interface (for example, the TDM interface). For descriptions of data packet encapsulation, refer to subsequent related descriptions. Details are not described herein.

The transmission chip TX812 is configured to receive the data through the fixed-rate interface (for example, the TDM interface), and send the data. The transmission chip TX812 may directly send the data received by the transmission chip TX812; or may preprocess the data received by the transmission chip TX812, and then send the preprocessed data. In a possible implementation, a preprocessing manner may be decapsulating the data packet received by the transmission chip TX812, to reduce additional overheads of data transmission. For example, the transmission chip TX812 decapsulates the received data packet, so that the data packet is restored to an H.264/H.265 coding format, to reduce additional overheads of data transmission. In some implementations, the transmission chip TX812 can send the data through a wired channel. For example, the transmission chip TX612 sends the data in a manner of a twisted pair, a coaxial cable, an optical fiber, or the like. In another implementation, the transmission chip TX612 can alternatively send the data through a wireless channel. A frequency band of the wireless channel is not limited in embodiments of this application, for example, may be between 77 GHz and 78 GHz.

The transmission chip RX821 is configured to receive the data packet, and then forward the received data packet. For example, the transmission chip RX821 receives the data packet from the camera module 810, and forwards the data packet. For another example, the transmission chip RX821 receives the data packet from the camera module 810, and forwards the data packet through a USB interface. It should be noted that the interface used by the transmission chip RX821 to send the data is not a fixed-rate interface (for example, a TDM interface). For example, the transmission chip RX821 may alternatively be a serial peripheral interface, a thunderbolt interface, a high definition multimedia interface, or the like.

The head unit chip 822 is configured to receive the data packet through the USB interface, for example, receive the data packet from the transmission chip RX821 through the USB interface. In some implementations, the head unit chip 822 is further configured to process the data packet received by the head unit chip 822. A specific manner of processing the data packet is not limited in embodiments of this application. For example, the head unit chip 822 performs operations such as using, forwarding, or unpacking the received data packet.

It may be understood that a multiplexing technology is featured in being capable of improving data transmission efficiency, reducing data transmission costs, facilitating maintenance, and the like. Further, the fixed-rate interface (for example, the TDM interface) is widely used due to features such as a simple structure, low costs, and a fixed rate. Therefore, performing data transmission through the fixed-rate interface (for example, the TDM interface) has features such as low technical difficulty, high data transmission efficiency, and low data transmission costs. However, because different services have different requirements for aspects such as a data transmission rate and a data delay, sizes of data packets used by different data streams may be different. Even a same data stream may use data packets of different sizes, the fixed-rate interface (for example, the TDM interface) cannot be directly used for data transmission. With diversified requirements of vehicle-mounted applications, for example, video applications such as head unit projection and surround-view, H.264/265 video services do not arrive at a constant speed and a packet size is variable. Therefore, the video services cannot be directly transmitted on the TDM interface. If an existing transmission interface can be reused, a periodicity for a new application to be deployed on a vehicle can be simplified, and the solution costs can be reduced. An intelligent vehicle is used as an example. Vehicle-mounted applications, for example, video applications such as head unit projection and surround-view, are increasing. Usually, a new application cannot directly use a fixed-rate interface (for example, a TDM interface) for data transmission, and data of the new application needs to be transmitted by adding a data transmission link. If data transmission can be performed by reusing an existing data transmission interface (for example, a TDM interface), not only data transmission costs can be reduced, but also a deployment periodicity of the application can be reduced.

In conclusion, the fixed-rate interface (for example, the TDM interface) is used to transmit data packets of different data streams or variable-rate data streams has features such as low costs, high efficiency, and low technical difficulty. How to encapsulate data packets of different data streams or variable-rate data streams into data packets that can be transmitted through the fixed-rate interface (for example, the TDM interface) is an urgent technical problem to be resolved currently.

In view of this, embodiments of this application provide a data transmission method and apparatus. In embodiments of this application, the data transmission apparatus is at least configured to send/receive data packets of M (where M is an integer greater than or equal to 1) data streams, where the data packets of the M data streams are M encapsulated data packets, and a size of a data packet of each data stream is associated with a target bandwidth of the data stream. In this way, data transmission of the M data streams can be performed through a fixed-rate interface (for example, a TDM interface). This improves data transmission efficiency, and reduces data transmission costs.

The target bandwidth may be a bandwidth allocated by a data transmission interface (for example, the sending unit 512 or the receiving unit 521 in FIG. 5) to one data stream. For a fixed-rate communication interface, a size of each data packet is fixed, and the size of each data packet is equal to a bandwidth of the communication interface divided by a periodicity frequency or a sampling frequency. Therefore, the size of the data packet of the data stream can be determined based on the target bandwidth. For example, if a bandwidth allocated to a data stream 1 is 375 KB/s, and a sampling frequency of the data transmission interface is 48 kHz, a size of a data packet of the data stream 1 is 375×1024×8/48K=38400B×8/48K=3072000 bits/48K=64 bits.

**The following describes the method provided in this application with reference to the accompanying drawings.**

FIG. 9 is a schematic flowchart of a data transmission method according to an embodiment of this application. Optionally, the method may be implemented based on the first electronic device 510 shown in FIG. 5.

The data transmission method shown in FIG. 9 may include one or both of step S901 and step S902. It should be understood that for ease of description, a sequence of S901 and S902 is used for description herein, but this is not intended to limit execution that is necessary in the foregoing sequence. An execution sequence, execution time, a quantity of execution times, and the like of the foregoing one or both steps are not limited in embodiments of this application. Step S901 and step S902 are specifically as follows.

Before the method shown in FIG. 9 is specifically described, some necessary descriptions are first provided for subsequent possible cases.
(1) A first target value is associated with a target bandwidth of a first data stream. It may mean that the first target value can be determined based on the target bandwidth of the first data stream, but it cannot be simply considered that the first target value is equal to the target bandwidth. The first target value is a size of a to-be-sent data packet (also referred to as a first data packet) of the first data stream. The target bandwidth is a bandwidth allocated to the first data stream, or a bandwidth used to transmit data of the first data stream.

For example, if the target bandwidth is 375 KB/s, and a sampling frequency of a data transmission interface is 48 kHz, the first target value is equal to 375×1024×8/48K=38400B×8/48K=3072000 bits/48K=64 bits.

(2) The method shown in FIG. 9 is intended to describe how to obtain the first data packet and how to send the first data packet in one transmission periodicity, and the transmission periodicity is referred to as a target transmission periodicity. It may be understood that FIG. 9 describes the technical solution provided in this application by using one transmission periodicity as an example. The technical solution provided in this application can be applied to a fixed-rate data transmission interface (which is equivalent to that each periodicity is of an equal size). The data transmission interface includes a plurality of transmission periodicities, for example, 10 transmission periodicities or 100 transmission periodicities. This is not limited in embodiments of this application. The method shown in FIG. 9 can be applied to each transmission periodicity of the data transport interface.

S901: A first electronic device obtains the first data packet.

The first electronic device may be, for example, the first electronic device 510 shown in FIG. 5, and specifically, may be, for example, the head unit chip 611 in FIG. 6, the transmission chip RX721 in FIG. 7, or the digital camera 811 in FIG. 8. For specific descriptions of the first electronic device, refer to the foregoing content.

In a possible implementation, the first electronic device can encapsulate a received data packet, to obtain the first data packet.

The data packet received by the first electronic device may include a data packet of one data stream or data packets of a plurality of data streams. For example, the first electronic device receives data packets of M data streams, and M is an integer greater than or equal to 1. For example, when M is equal to 3, the first electronic device receives data packets of three data streams. Optionally, the first electronic device may be configured to encapsulate a data packet received from another device, to obtain the first data packet. In some possible scenarios, the data packet that needs to be encapsulated may also come from a unit inside the first electronic device. For example, the first electronic device may be a system-on-a-chip (system-on-a-chip, SOC) of a head unit. A unit inside the SOC may generate H.264/H.265 data, and the SOC can also encapsulate the H.264/H.265 data generated inside the SOC, to obtain the first data packet.

The first electronic device encapsulates the received data packet. For example, the received data packet may be grouped based on a data stream type, and data packet encapsulation is performed by group. For example, M equal to 3 is used as an example. The first electronic device receives data packets of three data streams, and the three data streams are respectively a first data stream, a second data stream, and a third data stream. The first electronic device can separately receive one or more data packets from the three data streams. A quantity of received data packets is not limited in embodiments of this application. For example, the first electronic device receives three data packets of the first data stream, two data packets of the second data stream, and one data packet of the third data stream. For how to encapsulate the received data packet, detailed descriptions are provided in subsequent descriptions. Details are not described herein.

In some scenarios, the first electronic device may not receive a data packet of a specific data stream or a specific data stream has no to-be-sent data packet (which may be understood as that a service corresponding to the data stream has no to-be-sent data packet), which is equivalent to that a specific data stream temporarily has no corresponding data packet, or a quantity of data packets of a specific data stream received by the first electronic device is 0, or a quantity of data packets of a specific data stream received by the first electronic device is 0 in a target sending periodicity. The first data stream is used as an example. A quantity of data packets of the first data stream received by the first electronic device is 0. In this scenario, this embodiment of this application also provides a solution. Details are not described herein.

It should be noted that a quantity of data packets of each data stream received by the first electronic device may be that of data packets that the first electronic device has received but has not yet completed sending. For example, cache space is set in the first electronic device, and data of a first value can be cached. The first electronic device processes and forwards the received data packet, and those data packets that are stored in the cache space and that are not processed and forwarded may be referred to as a quantity of data packets of each data stream received by the first electronic device.

**The following describes how the first electronic device obtains the first data packet in different cases.** For ease of description, the first data packet may be a to-be-sent data packet of a specific data stream. For example, the first data packet may be the to-be-sent data packet of the first data stream. An example in which the first data packet is the to-be-sent data packet of the first data stream is used in all subsequent descriptions to describe the technical solution provided in this application.

**Case 1: The first electronic device receives only a data packet of one data stream (for example, the first data stream).** In this case, the first electronic device processes only the data packet that belongs to the data stream, to obtain the first data packet.

A size of the first data packet is the first target value, and the first target value is associated with the target bandwidth of the first data stream. The target bandwidth of the first data stream is less than or equal to a bandwidth of a communication interface of the first electronic device, the first data packet may include indication information and load information, a size of the load information is a second target value, and the second target value is less than the first target value.

With reference to FIG. 5, it may be learned that the first electronic device 510 includes the obtaining unit 511 and the sending unit 512. The communication interface may be the sending unit 512, and the bandwidth of the communication interface may be a transmission bandwidth supported by the sending unit 512.

The communication interface being a TDM interface is used as an example. A maximum bandwidth of the TDM interface may be determined by a quantity of TDM channels, a quantization bit width of each channel, and a sampling frequency. For example, if the TDM interface supports eight channels of data transmission, the quantization bit width of each channel is 16 bits, and the sampling frequency is 48 kHz, a data amount transmitted through the TDM interface in one second is 8×16×48K/8=6144000 bits=768000 bytes=750 KB, that is, the bandwidth of the TDM interface is 750 KB/s.

It should be noted that the TDM interface may support selection of the quantity of TDM channels, selection of the quantization bit width, and selection of the sampling frequency, and may select an appropriate quantity of channels, an appropriate quantization bit width, and an appropriate sampling frequency based on a requirement of the data stream. Table 1 shows an example of a quantity of TDM channels and a quantization bit width that may be supported by the TDM interface.

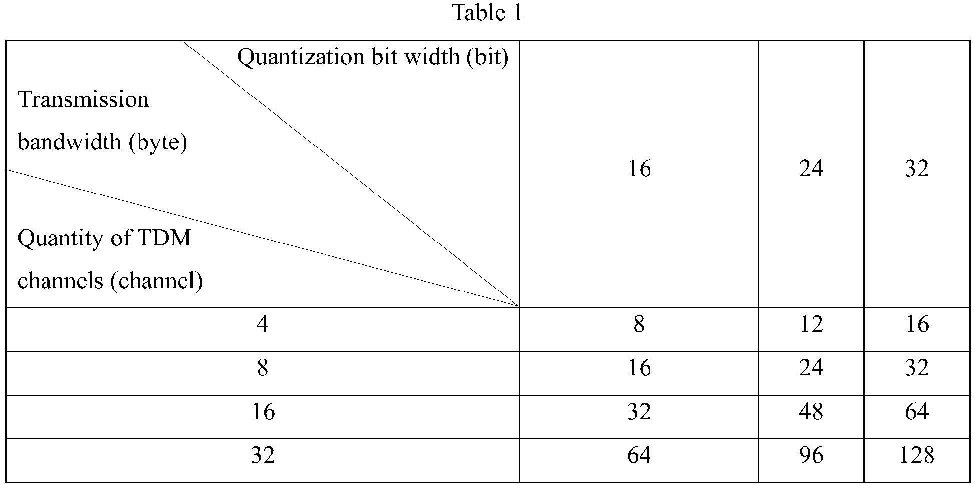

As shown in Table 1, Table 1 separately lists selection of four types of quantities of TDM channels and selection of three types of quantization bit widths supported by the TDM interface. The four types of quantities of TDM channels are 4, 8, 16, and 32 respectively, and the three types of quantization bit widths are 16 bits, 24 bits, and 32 bits respectively. The selection of the four types of quantities of TDM channels and the three types of quantization bit widths are combined respectively to determine that TDM can support 12 types of transmission bandwidths, that is, 12 types of data bytes are transmitted each time through the TDM interface. For details, refer to Table 1. Details are not enumerated herein again. In addition, the TDM interface can also support a plurality of sampling frequencies, for example, 24 kHz, 48 kHz, or 96 kHz. It may be understood that the TDM interface may support selection of more or fewer parameters (a quantity of channels, a quantization bit width, and a sampling frequency), and the parameters provided in Table 1 need to be not used as a limitation on this solution.

Before the TDM interface performs data transmission, one combination may be determined from the quantity of TDM channels, the quantization bit width, and the sampling frequency supported by the TDM interface, to determine the transmission bandwidth of the TDM interface. For example, if the TDM interface is selected to support 16-channel data transmission, the quantization bit width is 16 bits, and the sampling frequency is 48 kHz, the transmission bandwidth of the TDM interface is 1.5 MB/s.

In a possible implementation, the quantity of channels, the quantization bit width, and the sampling frequency of the TDM interface may be flexibly determined.

Manner 1: The quantity of channels, the quantization bit width, and the sampling frequency of the TDM interface may be determined in a preconfiguration manner. For example, after a data stream requirement of the TDM interface is clearly determined, an appropriate parameter may be preselected from the parameters supported by the TDM interface, and the quantity of channels, the quantization bit width, and the sampling frequency of the TDM interface are determined.

Manner 2: The quantity of channels, the quantization bit width, and the sampling frequency of the TDM interface may alternatively be determined in a manner selected by a user. For example, when a data stream requirement of the TDM interface changes, the user may reselect the quantity of channels, the quantization bit width, and the sampling frequency of the TDM interface. Specifically, when a quantity of data streams that need to be transmitted through the TDM interface increases from 8 to 16, the user may re-determine the quantity of channels of the TDM interface as 16, to meet a requirement brought by the change of the data streams. Alternatively, when a quantity of data streams remains unchanged, and a rate requirement of the data streams increases, the user may adjust the sampling frequency or the quantization bit width, to meet a requirement brought by the change of the data streams.

As mentioned in the foregoing content, the target bandwidth of the first data stream is less than or equal to the bandwidth of the communication interface of the first electronic device. The following describes the target bandwidth of the first data stream by using examples with reference to the bandwidth of the communication interface.

In a possible implementation, the target bandwidth of the first data stream may be the bandwidth required by the first data stream.

For example, the first data stream may be a video transmission data stream, and bandwidths required for transmitting videos of different definitions are different. For example, in a same coding format, a bandwidth required for transmitting a video with a resolution of 480P is usually less than a bandwidth required for transmitting a video with a resolution of 4K. Therefore, the bandwidth required by the data stream may be determined based on a requirement of the data stream, and the target bandwidth may be the bandwidth required by the data stream.

For example, if the bandwidth (namely, an example of the target bandwidth) required by the first data stream after an encapsulation protocol is considered is 1.5 MB/s, the parameters of the TDM interface may be configured as follows: 16 channels, the quantization bit width of each channel being 16 bits, and the sampling frequency being 48 kHz. Correspondingly, the size of the to-be-sent data packet of the first data stream is 16×16=256 bits.

It should be noted that when the first electronic device is used to transmit one data stream, the target bandwidth may be equal to the bandwidth of the communication interface. To be specific, the target bandwidth may be a quantity of bits carried in one frame of TDM signal, or a quantity of bits that can be transmitted in one TDM periodicity.

In another possible implementation, the target bandwidth may alternatively be a bandwidth that can be allocated by the TDM interface to the first data stream.

For example, if a maximum quantity of transmission channels that can be supported by the TDM interface is 16, a maximum quantization bit width of each channel is 32 bits, and the sampling frequency is 48 kHz, the maximum bandwidth that can be allocated by the TDM interface to the first data stream is 3 MB/s. For example, if the bandwidth required by the first data stream is 4 MB/s, but the TDM interface can allocate a bandwidth of 3MB/s to the first data stream, the target bandwidth is 3 MB/s. For another example, if the bandwidth required by the first data stream is 2 MB/s, but a minimum bandwidth allocated by the TDM interface to the first data stream is 3 MB/s, the target bandwidth may be 3 MB/s. For another example, if the bandwidth required by the first data stream is 1 MB/s, but the bandwidth that can be allocated by the TDM interface to the first data stream is 3 MB/s, because the bandwidth that can be allocated by the TDM interface is greater than the bandwidth required by the first data stream, and to save transmission energy consumption, the parameters of the TDM interface may be properly adjusted to enable the bandwidth that can be allocated by the TDM interface to the first data stream to be 1 MB/s, the target bandwidth is 1 MB/s. Further, the first target value may be determined based on the target bandwidth and the sampling frequency of the TDM interface. For details about how to determine the first target value based on the target bandwidth, refer to the foregoing related descriptions. Details are not described herein again.

The foregoing content separately explains and describes the bandwidth, the target bandwidth, the first target value, and the like of the communication interface. The following describes, based on the foregoing descriptions and with reference to the accompanying drawings, how to obtain the first data packet by using examples.

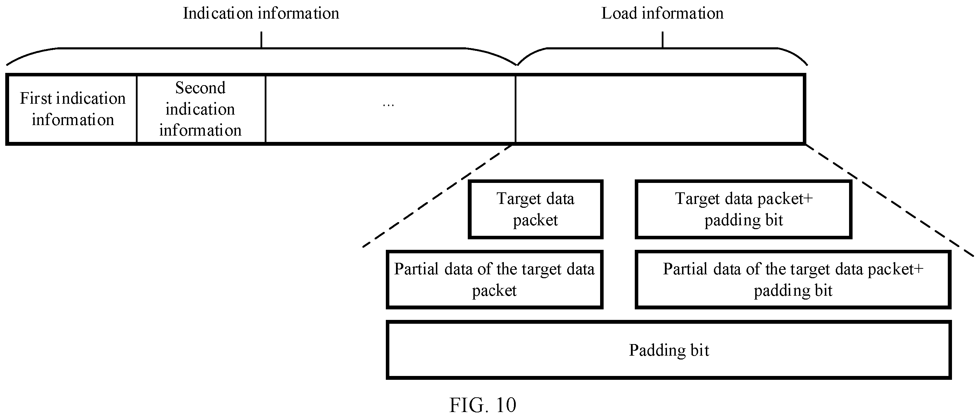

Before how to obtain the first data packet is specifically described, a format of the first data packet obtained through encapsulation is first described by using examples with reference to FIG. 10.

FIG. 10 is a diagram of a data packet encapsulation format according to an embodiment of this application, and is used to display the format of the first data packet. As shown in FIG. 10, the first data packet includes indication information and load information, the indication information includes first indication information, second indication information, and the like.

**The first indication information** may indicate a data stream type to which the first data packet belongs, so that an unpacking method corresponding to the data stream type is selected to unpack the to-be-sent data packet. In addition, the to-be-sent data packet may be further sent to a corresponding data stream node based on the data stream type. For example, the first electronic device receives target data packets of two data streams, and may mark, by using the first indication information, a type of a data stream carried in an encapsulated data packet, so that a data receive end can select, based on the first indication information in the received data packet, the unpacking method corresponding to the data stream type, and unpack data carried in the first data packet.

It may be understood that the target data packet may be a data packet obtained before encapsulation or a data packet that needs to be encapsulated, namely, a data packet that needs to be encapsulated to be of a fixed size (for example, the first target value).

It should be noted that when only one data stream is transmitted, because distinguishing between data streams does not need to be performed for data packets, the first data packet may not include the indication information indicating the data stream type.

**The second indication information** may indicate a quantity of valid bits in the load information. It may be learned from FIG. 10 that the load information may include a padding bit. For example, when the load information is "target data packet+padding bit", "partial data of the target data packet+padding bit", or "padding bit", the second indication information may indicate the valid bit in the load information, to correctly restore original data, and avoid incorrect unpacking.

In a possible implementation, when the load information includes valid data and invalid data, the valid data may be located in first N bits in the load information, or may be located in last N bits in the load information, where N is the quantity of valid bits.

For example, when N is 10, the second indication information indicates that the quantity of valid bits in the load information is 10, indicating that the load information includes 10 valid bits. The 10 valid bits may be first 10 bits in the load information, or may be last 10 bits in the load information. This is not limited in embodiments of this application.

In addition to the first indication information and the second indication information, the indication information may further include more indication information, for example, third indication information and fourth indication information.

**The third indication information** may be reserved indication information; and when necessary, a function of the indication information is specified or the indication information is enabled for indication. For example, the third indication information can indicate the data stream type. For example, in the third indication information, "000" represents the first data stream, and "001" represents the second data stream. How to specifically distinguish between the first data stream and the second data stream is not limited in embodiments of this application. For example, the third indication information can be further used as a data stream header indication. For example, "1" indicates that data carried in the load information in the first data packet is a header. For another example, "0" indicates that the data carried in the load information in the first data packet is a trailer. It may be understood that the third indication information may further indicate other information. This is not limited in embodiments of this application.

Optionally, the third indication information may further indicate a data stream identifier to which the first data packet belongs, so that the data receive end sends load in the first data packet to an appropriate data transmission node. For example, the first electronic device receives target data packets of two data streams, which are respectively a first data stream and a second data stream. The data receive end may send, based on the third indication information in the data packet, the data packet obtained through decapsulation to the data transmission node indicated by the third indication information. Optionally, the data transmission node that obtains the data packet through decapsulation may be determined based on the first indication information and the third indication information.

**The fourth indication information** may be check information and error correction information of at least one of the first indication information, the second indication information, and the third indication information. For example, the fourth indication information is a forward error correction code, and can be for performing error correction on at least one of the first indication information, the second indication information, and the third indication information; or the fourth indication information is an error detection code (for example, the fourth indication information may be cyclic redundancy check (cyclic redundancy check, CRC)), and can be for performing error detection to achieve a protection function, so that the obtained indication information is accurate and valid, and data transmission is better performed.

It should be noted that a type of the indication information (for example, the first indication information or the second indication information), a size of the indication information (for example, a quantity of bits occupied by the first indication information), and a sequence of the indication information that are included in the indication information all are not limited in embodiments of this application. Before the data packet is encapsulated, the type of the indication information, a quantity of pieces of indication information, and the sequence of the indication information that are included in the encapsulated data packet may be determined in a presetting manner. For example, it may be preset that the encapsulated data packet includes the first indication information and the second indication information, where the first indication information occupies four bits, and the second indication information occupies six bits. For example, the sequence of the indication information may be the first indication information, the second indication information, the third indication information, and the fourth indication information that sequentially arranged, or an arrangement manner may be the second indication information, the first indication information, the third indication information, and the fourth indication information.

The following describes the load information shown in FIG. 10 by using examples. The load information is used to carry a to-be-encapsulated data packet, or the target data packet, for example, the data packet of the first data stream received by the first electronic device. The size of the load information may be preset, or may be determined with reference to the first target value and the size of the indication information. For example, the size of the load information may be preset to 6 bytes, 8 bytes, 10 bytes, or the like. For another example, if the first target value is 8 bytes, and the indication information determines that 1 byte needs to be occupied, the size of the load information is 7 bytes. The size of the load information may be referred to as a second target value, and the second target value is less than the first target value.

**Because the size of the target data packet is not determined, composition of the encapsulated load information is also different. The following five forms are specifically included.**

### Form 1: The target data packet is the load information.

When the size of the target data packet is equal to the size of the load information, the target data may be used as the load information in the first data packet. For example, if the size of the target data packet is 6 bytes, and the size of the load information is also 6 bytes, the target data packet may be directly used as the load information in the first data packet.

### Form 2: Target data packet+padding bit are the load information.

When the target data packet is less than the load information, the load information may be determined in a manner of padding an invalid bit. For example, the composition form of the load information may be the target data packet+the padding bit (where valid bit data is first N bits in the load information), or may be the padding bit+the target data packet (where valid bit data is last N bits in the load information), where N is the quantity of valid bits in the load information. The second indication information may indicate that the quantity of valid bits in the load information is N. For example, N is 10, 20, 100, or the like.

### Form 3: Partial data of the target data packet.

When the target data packet is greater than the load information, the partial data of the target data packet may be intercepted as the load information. For example, if the size of the target data packet is 20 bytes, and the second target value is 10 bytes, first 10 bytes in the target data packet may be intercepted as the load information.

In some possible scenarios, when the size of the target data packet is an integer multiple of the load information, the target data packet may be divided into a plurality of segments, and each segment may be used as the load information. For example, if the size of the target data packet is 50 bytes, and the second target value is 10 bytes, the target data packet may be divided into five consecutive segments, and each segment may be used as the load information.

### Form 4: Partial data of the target data packet+padding bit.

In some other possible scenarios, when the size of the target data packet is not an integer multiple of the load information, after a plurality of segments of data whose sizes are the second target value are intercepted from the target data packet, a size of a remaining last segment of data is less than the second target value, and cannot be used as the load information. Therefore, the padding bit is required, so that the load information can carry the last segment of data. For example, if the size of the target data packet is 46 bytes, and the second target value is 10 bytes, first four segments of data whose sizes are 10 bytes all may be used as the load information. A remaining segment of data whose size is 6 bytes cannot be directly used as the load information, and 4-byte bit data needs to be padded. Therefore, in this case, the load information includes the partial data of the target data packet+the padding bit. In addition, the indication information in the first data packet can mark valid data (for example, 6-byte valid data) in the load information, and this facilitates the receive end to perform identification and unpacking.

### Form 5: Padding bit.

Usually, the TDM interface sends data of different data streams in a time division manner, data of one or more data streams is included in one sending periodicity, and the receive end extracts data in one periodicity according to a preset rule. If a data loss occurs in one sending periodicity, phenomenons such as data time sequence disorder and abnormal data receiving may be caused. For example, if data of five data streams is preset to be sent in one sending periodicity, but data of only four data streams is sent, phenomenons that the data receive end may incorrectly identify a data stream type of the data, noise data fails to be received, and the like may occur.

To avoid the foregoing phenomenons, when the target data packet is not received, the padding bit is used as the load information, to avoid phenomenons such as data time sequence disorder and abnormal data receiving. For example, when the size of the load information is 10 bits, 10 bits "0" may be used as the load information, or 10 bits "1" may be used as the load information. This is not limited in embodiments of this application. In addition, the indication information in the first data packet may identify that the quantity of valid bits in the load information is 0.

It may be learned from the foregoing descriptions that in the technical solution provided in this embodiment of this application, a data packet of any size may be encapsulated into a data packet whose size is the first target value. Therefore, an encapsulation process may be referred to as adaptation layer (adaptation Layer, ADL) encapsulation, and a data packet obtained through encapsulation is referred to as an ADL data packet. It may be learned from the foregoing analysis that a size of the ADL data packet is the first target value, and the first target value is configurable. For a configuration method, refer to the foregoing descriptions. Details are not described herein again. Therefore, the size of the ADL data packet is configurable.

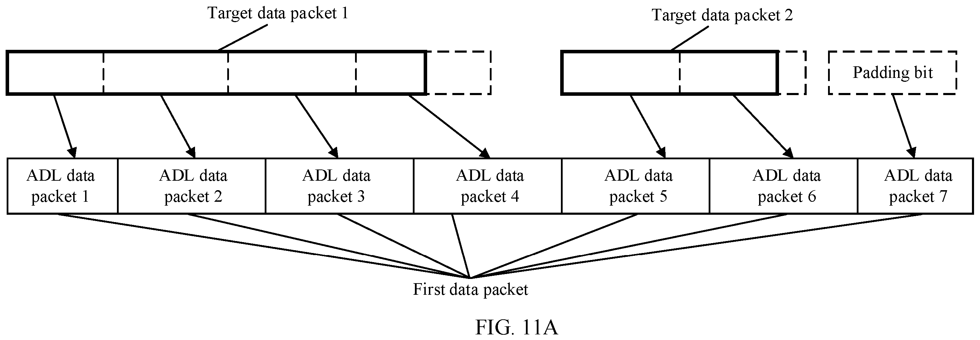

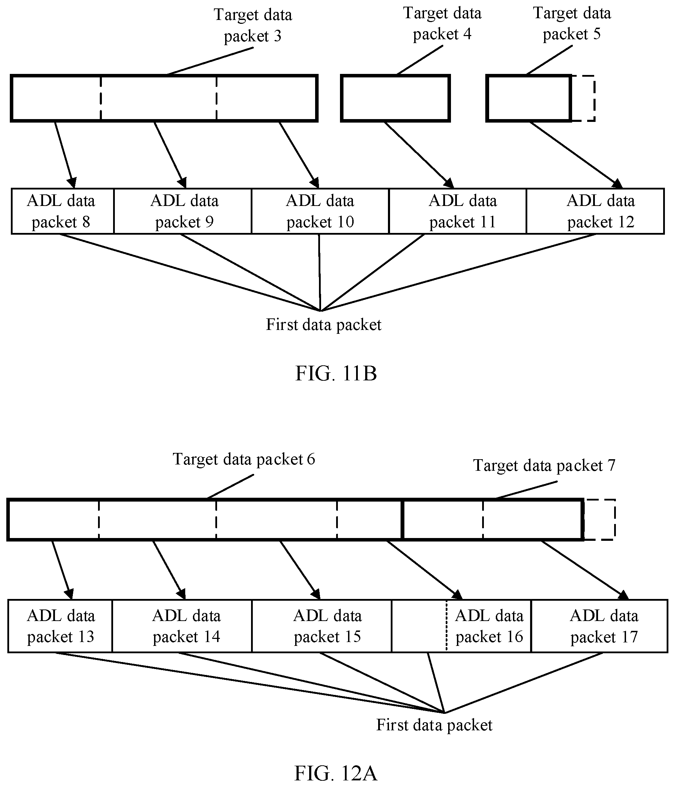

The format of the first data packet is described by using examples in FIG. 10. The following describes a data packet encapsulation process by using examples with reference to FIG. 11A and FIG. 11B.

**FIG. 11A** **is a diagram of a first type of data packet encapsulation according to an embodiment of this application, and is used to describe, by using examples, a case in which the size of the target data packet is a non-integer multiple of the second target value and a case in which the target data packet is not received.**

In FIG. 11A, a target data packet 1, a target data packet 2, and ADL data packets 1 to 7 are included. The target data packet 1 and the target data packet 2 may be, for example, data packets that belong to the first data stream and that are sequentially received by the first electronic device, the ADL data packets 1 to 7 are data packets obtained after encapsulation, and the ADL data packets 1 to 7 all may be referred to as first data packets. Because the first electronic device receives only a data packet of one data stream, the size of the first data packet is a quantity of bits that can be carried in one TDM transmission periodicity.

The following describes, by using examples, an encapsulation process shown in FIG. 11A by using the first data stream being an H.264/H.265 video data stream. The H.264/H.265 video data stream is a variable-rate data stream. Therefore, sizes of the target data packet 1 and the target data packet 2 may be different. The first data packet obtained after encapsulation may include indication information and load information, a size of the load information is a second target value, the second target value is less than the first target value, and the load information carries data before encapsulation. For example, the first target value is 8 bytes, the second target value may be 6 bytes, and the 6 bytes carry the data before encapsulation.

**In** **FIG. 11A****, neither a size of the target data packet 1 nor a size of the target data packet 2 is an integer multiple of the second target value.** For example, the size of the target data packet 1 may be 3.5 times the second target value, and the size of the target data packet 2 may be 1.8 times the second target value.

**The target data packet 1 and the target data packet 2 may be segmented based on the second target value.**

After the segmentation, the target data packet 1 includes four segments of data, where sizes of first three segments of data are the second target value, and may be directly used as the load information in the first data packet (complying with the form 3 in FIG. 10), for example, are respectively used as load information in the ADL data packet 1, load information in the ADL data packet 2, and load information in the ADL data packet 3. A size of the fourth segment of data is less than the second target value, and a padding bit needs to be padded (complying with the form 4 in FIG. 10). A dashed box behind the target data packet 1 in FIG. 11A represents the padding bit. For example, load information in the ADL data packet 4 includes the fourth segment of data+the padding bit.

After the segmentation, the target data packet 2 includes two segments of data, where a size of a first segment of data is the second target value, and may be directly used as the load information in the first data packet (complying with the form 3 in FIG. 10), for example, is used as load information in the ADL data packet 5. Similarly, a size of a second segment of data is less than the second target value, and a padding bit needs to be padded (complying with the form 4 in FIG. 10). A dashed box behind the target data packet 2 in FIG. 11A represents the padding bit. For example, load information in the ADL data packet 6 includes the second segment of data+the padding bit.

When the size of the target data packet is greater than the second target value, the target data packet can be encapsulated into a plurality of data packets of a fixed length for outputting by segmenting the target data packet and padding a bit, to adapt to an interface of a fixed bandwidth, so that data is transmitted at a uniform rate. After data packets of different data streams are segmented and padded to obtain data packets of a fixed length, an interface of a same fixed bandwidth may be reused, so that data transmission efficiency can be improved, and data transmission costs can be reduced. If data of a newly added data stream is encapsulated into a data packet of a target length, and an existing data transmission interface is reused, a go-online periodicity of the new data stream can be reduced, and project costs can be reduced.

In a possible scenario, if the first electronic device does not receive the target data packet of the first data stream, the first electronic device needs to obtain the first data packet (complying with the form 5 in FIG. 10) in a manner of padding a bit, for example, the ADL data packet 7 in FIG. 11A, where indication information in the ADL data packet 7 indicates that valid data of the load information is 0.

When the target data packet is not received, the first data packet is determined in a manner of padding a bit. This ensures that no data interruption occurs, and reduces an abnormal case caused by data interruption.

FIG. 11A separately lists a case in which the size of the target data packet is a non-integer multiple of the second target value and a case in which the target data packet is not received.

**The following describes, by using** **FIG. 11B****, a case in which the size of the target data packet is an integer multiple of the second target value and a case in which the size of the first target data packet is less than the second target value.**

FIG. 11B is a diagram of a second type of data packet encapsulation according to an embodiment of this application. A target data packet 3, a target data packet 4, a target data packet 5, and ADL data packets 8 to 12 are included. The target data packet 3, the target data packet 4, and the target data packet 5 may be, for example, data packets that belong to the first data stream and that are sequentially received by the first electronic device, the ADL data packets 8 to 12 are data packets obtained after encapsulation, and the ADL data packets 8 to 12 all may be referred to as first data packets. Because the first electronic device receives only a data packet of one data stream, the size of the first data packet is a quantity of bits that can be carried in one TDM transmission periodicity.

The following describes, by using examples, an encapsulation process shown in FIG. 11B by using the first data stream being an H.264/H.265 video data stream. The H.264/H.265 video data stream is a variable-rate data stream. Therefore, sizes of the target data packet 3, the target data packet 4, and the target data packet 5 may be different. The first data packet obtained after encapsulation may include indication information and load information, a size of the load information is a second target value, the second target value is less than the first target value, and the load information carries data before encapsulation. For example, the first target value is 8 bytes, the second target value may be 6 bytes, and the 6 bytes carry the data before encapsulation.

In FIG. 11B, both the target data packet 3 and the target data packet 4 are integer multiples of the second target value. For example, the size of the target data packet 3 is three times the second target value. The target data packet 3 may be segmented based on the second target value. After the segmentation, the target data packet 3 includes three segments of data, and sizes of the segments of data are the second target value, and may be directly used as the load information in the first data packet (complying with the form 3 in FIG. 10), for example, are respectively used as load information in the ADL data packet 8, load information in the ADL data packet 9, and load information in the ADL data packet 10. The size of the target data packet 4 is one time the second target value, and the target data packet 4 may be directly used as the load information in the first data packet (complying with form 1 in FIG. 10). For example, the target data packet 4 may be used as load information in the ADL data packet 11.

When the size of the target data packet is an integer multiple of the second target value, the target data packet can be encapsulated into a plurality of data packets of a fixed length for outputting by segmenting the target data packet, to adapt to an interface of a fixed bandwidth, so that data is transmitted at a uniform rate. After data packets of different data streams are segmented to obtain data packets of a fixed length, an interface of a same fixed bandwidth may be reused, so that data transmission efficiency can be improved, and data transmission costs can be reduced. If data of a newly added data stream is encapsulated into a data packet of a target length, and an existing data transmission interface is reused, a go-online periodicity of the new data stream can be reduced, and project costs can be reduced.

In a possible scenario, when the size of the target data packet received by the first electronic device is less than the second target value, the first electronic device may perform bit padding on the target data packet, so that a size of data obtained after padding is equal to the second target value (complying with Form 2 in FIG. 10). For example, in FIG. 11B, if the size of the target data packet 5 is less than the second target value, the target data packet 5 may be carried in the load information in the first data packet in a manner of padding a bit. Load information in the ADL data packet 12 in FIG. 11B includes the target data packet 5 and the padding bit.

When the size of the target data packet is less than the second target value, the target data packet can be encapsulated into one data packet of a fixed length for outputting by padding the target data packet, to adapt to an interface of a fixed bandwidth, so that data is transmitted at a uniform rate. After data packets of different data streams are padded to obtain data packets of a fixed length, an interface of a same fixed bandwidth may be reused, so that data transmission efficiency can be improved, and data transmission costs can be reduced. If data of a newly added data stream is encapsulated into a data packet of a target length, and an existing data transmission interface is reused, a go-online periodicity of the new data stream can be reduced, and project costs can be reduced.

FIG. 11A and FIG. 11B describe a case in which the received target data packet is encapsulated into one or more first data packets. If the plurality of received target data packets are all non-integer multiples of the second target value, a large amount of bit data needs to be padded, and a size of an encapsulated data packet is determined as the second target value. This increases additional overheads of data transmission, and affects data transmission efficiency.

**In view of this, an embodiment of this application further provides another data encapsulation method, to show a case in which one or more data packets are encapsulated into one ADL packet.**

**In a possible scenario, the load information in the first data packet may include data of two target data packets, as shown in** **FIG. 12A****.**

FIG. 12A is a diagram of a third type of data encapsulation according to an embodiment of this application. In FIG. 12A, a target data packet 6, a target data packet 7, and ADL data packets 13 to 17 are included. The target data packet 6 and the target data packet 7 may be, for example, data packets that belong to the first data stream and that are sequentially received by the first electronic device, the ADL data packets 13 to 17 are data packets obtained after encapsulation, and the ADL data packets 13 to 17 all may be referred to as first data packets. Because the first electronic device receives only a data packet of one data stream, a size of the first data packet is a quantity of bits that can be carried in one TDM transmission periodicity.

The following describes, by using examples, an encapsulation process shown in FIG. 12A by using the first data stream being an H.264/H.265 video data stream. The H.264/H.265 video data stream is a variable-rate data stream. Therefore, sizes of the target data packet 6 and the target data packet 7 may be different. The first data packet obtained after encapsulation may include indication information and load information, a size of the load information is a second target value, the second target value is less than a first target value, and the load information carries data before encapsulation. For example, the first target value is 8 bytes, the second target value may be 6 bytes, and the 6 bytes carry the data before encapsulation.

The sizes of the target data packet 6 and the target data packet 7 in FIG. 12A are not limited in embodiments of this application. For example, the size of the target data packet 6 or the size of the target data packet 7 may be an integer multiple of the second target value (for example, one or two times of the second target value) or a non-integer multiple (for example, 0.5 time or 1.6 times) of the second target value. For example, the size of the target data packet 6 is 3.4 times the second target value, and the size of the target data packet 7 is 1.2 times the second target value.

A difference between the encapsulation method shown in FIG. 12A and the encapsulation method shown in FIG. 11A and FIG. 11B is that the encapsulation method shown in FIG. 12A may perform combined encapsulation, so that the load information in the first data packet obtained after encapsulation can include data of one or more target data packets. This avoids padding a large amount of bit data, and reducing additional overheads.

Specifically, as shown in FIG. 12A, the target data packet 6 is segmented based on the second target value, and first three segments after segmentation are respectively used as load information in the ADL data packet 13, load information in the ADL data packet 14, and load information in the ADL data packet 15. A remaining segment of data of the target data packet 6 is less than the second target value, and cannot be directly used as load information in the ADL data packet 16, and bit padding needs to be performed.

In a possible implementation, when bit padding needs to be performed, bit padding may be performed by using data in a subsequent data packet. For example, if a fourth segment of data of the target data packet 6 is less than the second target value, partial data in the target data packet 7 may be used to pad a missing part. Therefore, the load information in the ADL data packet 16 includes data of the target data packet 6 and data of the target data packet 7.

In a possible scenario, when bit padding needs to be performed and there is no data packet subsequently, invalid bit data may be used for padding. For a specific padding method, refer to related descriptions in FIG. 11A. Details are not described herein again. For example, after the target data packet 7 in FIG. 12A is segmented, a first segment of data and a last segment of data of the target data packet 6 form the load information in the ADL data packet 16. A size of a second segment of data of the target data packet 7 is less than the second target value, and cannot be separately used as load information in the ADL data packet 17. In addition, if no new data packet that belongs to the first data stream is received after the target data packet 7, the second segment of data may be padded with a bit, to form the load information in the ADL data packet 17.

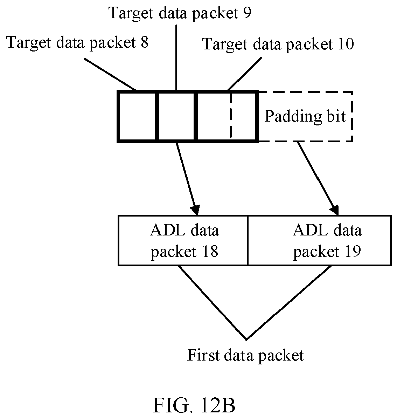

**In another possible scenario, the load information in the first data packet may include data of a plurality of target data packets, as shown in** **FIG. 12B****.**

FIG. 12B is a diagram of another type of data encapsulation according to an embodiment of this application. A target data packet 8, a target data packet 9, a target data packet 10, and ADL data packets 18 and 19 are included. The target data packets 8 to 10 may be, for example, data packets that belong to the first data stream and that are sequentially received by the first electronic device, the ADL data packets 18 and 19 are data packets obtained after encapsulation, and the ADL data packets 18 and 19 both may be referred to as first data packets.

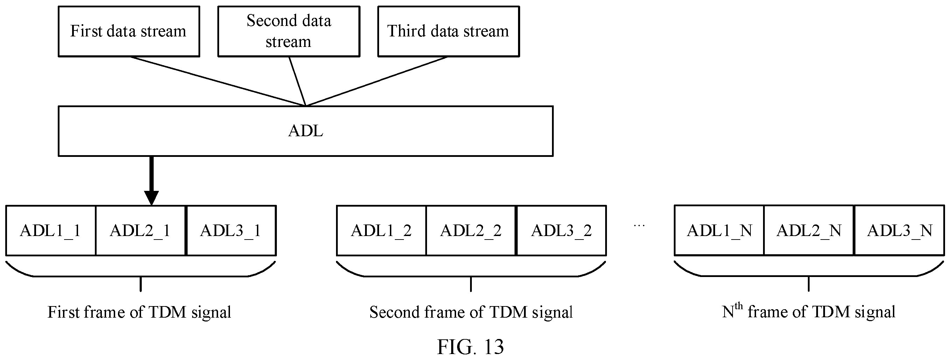

Both a size of the target data packet 8 and a size of the target data packet 9 are less than the second target value, and a sum of the sizes of the target data packet 8 and the target data packet 9 is also less than the second target value. Therefore, data of more target data packets is required to form load information in the ADL data packet 18. It may be learned from FIG. 13 that partial data of the target data 8, partial data of the target data packet 9, and partial data of the target data packet 10 form the load information in the ADL data packet 18. Remaining data of the target data packet 10 may be encapsulated into the ADL data packet 19 in a manner of padding a bit.

A data packet of a fixed length is obtained by performing combined encapsulation on a plurality of data packets, so that a quantity of padding bits can be reduced, the communication interface transmits as much valid data as possible, and transmission of invalid data is reduced, thereby reducing unnecessary transmission overheads, and improving data transmission efficiency.

It should be noted that in the encapsulation manner in FIG. 12A and FIG. 12B, an identifier indicating one complete data packet needs to be added to the indication information in the first data packet, so that the receive end can smoothly restore an original target data packet. For example, when the load information in the first data packet includes data of a plurality of target data packets, the indication information may indicate that the load information includes a quantity of target data packets and a data volume occupied by each target data packet. FIG. 12B is used as an example. If the load information in the ADL data packet 18 includes data of three target data packets, and data amounts of the three target data packets are respectively 3 bytes, 4 bytes, and 3 bytes, indication information in the ADL data packet 18 needs to be capable of indicating that the ADL data packet 18 includes the data of the three target data packets, and the data amounts are respectively the 3 bytes, the 4 bytes, and the 3 bytes. How the indication information is implemented is not limited in embodiments of this application. For example, a network abstraction layer (network abstraction layer, NAL) of an H.264/H.265 video data stream can restore an original data packet from scattered data.

The foregoing describes, by using examples, how the first electronic device obtains the first data packet when the first electronic device receives only a data packet of one data stream. The following describes, by using examples with reference to the accompanying drawings, how the first electronic device obtains the first data packet when the first electronic device receives data packets of a plurality of data streams.

**Case 2: The first electronic device receives data packets of a plurality of data streams.** In this case, the first electronic device needs to separately process the data packets of the plurality of data streams, to obtain the first data packet.

The plurality of data streams may be, for example, M data streams, and M is an integer greater than or equal to 1. The data packets of the plurality of data streams may be, for example, data packets of eight, 10, or 16 data streams. This is not limited in embodiments of this application. A quantity of data packets of different data streams that can be received by the first electronic device is related to a quantity of channels that can be supported by the communication interface. For example, if the communication interface supports transmission of a maximum quantity of 48 data streams, the first electronic device can receive data packets of a maximum of 48 data streams. In addition, a bandwidth further needs to be allocated to each data stream. A specific allocation manner is not limited in embodiments of this application. For example, even allocation may be performed, to be specific, the bandwidth supported by the communication interface is evenly allocated to the plurality of data streams, and bandwidths occupied by the data streams are equal. For example, on-demand allocation may alternatively be performed, to be specific, a bandwidth is allocated based on a requirement of a data stream. For example, user-defined allocation may alternatively be performed, to be specific, the user autonomously configures the bandwidth occupied by each data stream.

For ease of description, the following uses an example in which the first electronic device receives data packets of three data streams, to describe, by using examples, the method for obtaining the first data packet when the first electronic device receives the data packets of the plurality of data streams. FIG. 13 is a diagram of a fifth type of encapsulation according to an embodiment of this application. A first data stream, a second data stream, and a third data stream are included.

When data packets of a plurality of data streams are received, a target bandwidth is allocated to each data stream for data transmission. A principle of allocating the bandwidth may be, for example, allocating based on a requirement of a data stream, or a bandwidth used for each data stream may be determined based on a bandwidth that can be allocated by the electronic device. A manner of allocating the bandwidth may be, for example, preconfiguring or user-defining. For example, before the first electronic device transmits data, each bandwidth used for each data stream may be configured. Alternatively, in a process of transmitting data by the first electronic device, the bandwidth used by the data stream may be adjusted. The target bandwidth herein is associated with the size of the ADL data packet, which is equivalent to that the target bandwidth is equal to the size of the ADL data packet. The target bandwidth herein is a quantity of bits that can be carried in one TDM periodicity. For details, refer to the foregoing related descriptions. Details are not described herein again.

After the target bandwidth of each data stream is determined (which is equivalent to that a size of an ADL data packet of each data stream is determined), the received data packet of each data stream may be data packet-encapsulated by using the encapsulation method shown in FIG. 11A and FIG. 11B or the encapsulation method shown in FIG. 12A and FIG. 12B. For example, if 10 bytes may be transmitted in one target transmission periodicity (which is equivalent to that the bandwidth of the communication interface is 10 bytes), and target bandwidths allocated to the first data stream, the second data stream, and the third data stream are 3 bytes, 4 bytes, and 3 bytes sequentially, a size of an ADL data packet corresponding to the first data stream needs to be 3 bytes, a size of an ADL data packet corresponding to the second data stream needs to be 4 bytes, and a size of an ADL data packet corresponding to the third data stream needs to be 3 bytes. For a specific encapsulation process, refer to the foregoing corresponding descriptions. Details are not described herein again.

For example, a data packet obtained after ADL encapsulation is performed on the first data stream is ADL1 (for example, the size is 3 bytes), a data packet obtained after ADL encapsulation is performed on the second data stream is ADL2 (for example, the size is 4 bytes), and a data packet obtained after ADL encapsulation is performed on the second data stream is ADL3 (for example, the size is 3 bytes). ADL1_1, ADL1_2, and ADL1_N in FIG. 13 respectively represent three ADL data packets obtained by encapsulating the first data stream, where ADL1_1 represents a first data packet obtained by encapsulating the first data stream, ADL1_2 represents a second data packet obtained by encapsulating the first data stream, and ADL1_N represents an N^{th} data packet obtained by encapsulating the first data stream. Similarly, ADL2_1, ADL2_2, and ADL2_N respectively represent three ADL data packets obtained by encapsulating the second data stream, and ADL1_N, ADL2_N, and ADL3_N respectively represent three ADL data packets obtained by encapsulating the first data stream.

In a possible implementation, the ADL data packets of the plurality of data streams are encapsulated into one frame of TDM signal based on a sequence. The sequence of the ADL data packets of the plurality of data streams in one frame of TDM signal is not limited in embodiments of this application. For example, a sequence of ADL1, ADL2, and ADL3 in one frame of TDM signal may be ADL1, ADL2, and ADL3, or may be ADL2, ADL1, and ADL3, or may be ADL3, ADL2, and ADL1.

For example, the sequence of the ADL data packets of the plurality of data streams in one frame of TDM signal may be preconfigured or user-defined. For example, a sequence of ADL data packets of each data stream in one frame of TDM signal may be configured before encapsulation, or a sequence of ADL data packets of each data stream in one frame of TDM signal may be flexibly modified in a data transmission process.

For ease of description, this application is described by using the sequence of the ADL data packets in one frame of TDM signal being ADL1, ADL2, and ADL3. As shown in FIG. 13, ADL1_1, ADL2_1, and ADL3_1 form a first frame of TDM signal, ADL1_2, ADL2_2, and ADL3_2 form a second frame of TDM signal, and ADL1_N, ADL2_N, and ADL3_N form an N^{th} frame of TDM signal.

It may be understood that ADL1_1, ADL2_1, ADL3_1, ADL1_2, ADL2_2, ADL3_2, ADL1_N, ADL2_N, and ADL3_N shown in FIG. 13 all may be first data packets, namely, data packets encapsulated to be of a fixed bandwidth. However, in a data sending process, data is sent by using one TDM frame signal as a whole. Therefore, when one frame of TDM frame signal includes a plurality of first data packets, sending the first data packets may be understood as sending one frame of TDM signal that carries the first data packets.

According to the encapsulation method shown in FIG. 13, a plurality of data streams may be encapsulated into a data packet of a fixed length, so that data is transmitted through a fixed-bandwidth data transmission interface, a data transmission rate can be increased, and data transmission costs can be reduced.

S902: The first electronic device sends the first data packet.

The first electronic device may be, for example, the first electronic device 510 shown in FIG. 5. Specifically, the first electronic device may be, for example, the head unit chip 611 in FIG. 6, the transmission chip RX721 in FIG. 7, or the digital camera 811 in FIG. 8.

The first data packet is the first data packet obtained in step S901, for example, the first data packet shown in FIG. 11A, or the first data packet shown in FIG. 11B, or the first data packet shown in FIG. 12A, or the first data packet shown in FIG. 12B, or may be ADL1_1, ADL2_1, ADL3_1, ADL1_2, ADL2_2, ADL3_2, ADL1_N, ADL2_N, and ADL3_N shown in FIG. 13.

The first electronic device may perform sending through a wireless channel or a wired channel and the TDM interface. A signal modulation manner is not limited in embodiments of this application, for example, may be amplitude shift keying (amplitude shift keying, ASK) modulation, frequency shift keying (frequency shift keying, FSK) modulation, or phase shift keying (phase shift keying, PSK) modulation.

In FIG. 9, the received data packet is encapsulated into a data packet of a fixed size, so that a fixed-bandwidth data transmission interface can be used to transmit the encapsulated data packet, a variable-rate data stream can use a fixed-transmission bandwidth interface to transmit data, or a plurality of data streams can share one data transmission interface. This improves data transmission efficiency, and reduces data transmission costs. In addition, according to the method shown in FIG. 9, an existing data transmission interface can be reused for a newly added data stream, so that a go-online periodicity of the data stream can be reduced, and costs of the data stream can be reduced.

The following describes how the data receive end restores the original data packet from the received signal by using examples.

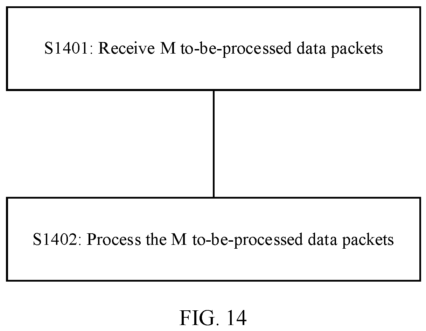

FIG. 14 is a flowchart of another data transmission method according to an embodiment of this application. Optionally, the method may be implemented based on the first electronic device 510 shown in FIG. 5.

The data transmission method shown in FIG. 14 may include one or both of step S1401 and step S1402. It should be understood that for ease of description, a sequence of S1401 and S1402 is used for description herein, but this is not intended to limit execution that is necessary in the foregoing sequence. An execution sequence, execution time, a quantity of execution times, and the like of the foregoing one or both steps are not limited in embodiments of this application. Step S1401 and step S1402 are specifically as follows.

S1401: A second electronic device receives M to-be-processed data packets.

The second electronic device may be, for example, the second electronic device 520 shown in FIG. 5, and specifically, may be, for example, the DSP 622 in FIG. 6, the DSP 722 in FIG. 7, or the transmission chip TX812 in FIG. 8. For specific descriptions of the second electronic device, refer to the foregoing content. Details are not described herein again.

The M to-be-processed data packets may be data packets included in one received TDM frame signal, and M is an integer greater than or equal to 1. For example, when the TDM frame signal includes only an ADL data packet of one data stream (for example, the case 1 in step S901), M is equal to 1. For another example, when the TDM frame signal includes ADL data packets of a plurality of data streams, M is equal to a quantity of data streams. For example, when the TDM frame signal includes ADL data packets of eight data streams, M is equal to 8.

The second electronic device may receive the M to-be-processed data packets through a wireless signal or a wired channel and a TDM interface. A modulation manner of receiving the signal is not limited in embodiments of this application, for example, may be ASK modulation, FSK modulation, or PSK modulation. A process of receiving the signal may further include demultiplexing, a low noise method, demodulation, or the like. Finally, the first data packet shown in FIG. 11A and FIG. 11B, or the first data packet shown in FIG. 12A and FIG. 12B, or the first frame of signal, the second frame of signal, or the third frame of signal shown in FIG. 13 is obtained through restoration.

S1402: The second electronic device processes the M to-be-processed data packets.

The M to-be-processed data packets may be, for example, the M to-be-processed data packets received by the second electronic device in step S1401, and M is an integer greater than or equal to 1.

**When M is equal to 1,** it indicates that one frame of TDM signal received by the second electronic device includes only one data packet, or a data transmit end transmits only data of one data stream. In this case, valid data may be restored from the to-be-processed data packet by using a quantity of valid bits indicated by indication information in the to-be-processed data packet.

How to determine a valid bit in load information based on the indication information is not limited in embodiments of this application.

For example, how to read valid information from the load information when the quantity of valid bits is known may be configured in a preset manner.

For example, a size of a first to-be-processed data packet (one data packet in the M to-be-processed data packets) is 6 bytes, where the indication information occupies 2 bytes, and the load information occupies 4 bytes. The quantity of valid bits indicated by the indication information is 2 bytes, and the 2-byte data may be any 2-byte data in the load information. The following two manners may be specifically included:
Manner 1: If the load information is formed in a form of valid data+invalid data, that is, the valid data is located before the invalid data, a first half of 2-byte information in the load information may be used as the valid data, and remaining 2-byte data is discarded.
Manner 2: If the load information is formed in a form of invalid data+valid data, that is, the invalid data is located before the valid data, a second half of 2-byte information in the load information may be used as the valid data, and remaining 2-byte data is discarded.

**When M is greater than 1,** it indicates that one frame of TDM signal received by the second electronic device includes a plurality of data packets (which are equivalent to a plurality of to-be-processed data packets), or the data transmit end transmits data of a plurality of data streams. In this case, valid data in each to-be-processed data packet may also be restored by using a quantity of valid bits indicated by indication information in each to-be-processed data packet. For details about how to read the valid bit from the load information, refer to the foregoing related content. Details are not described herein again.

In a possible implementation, after the valid data is restored from the M to-be-processed data packets, the target data packet further needs to be restored. The target data packet may be, for example, the target data packet described in FIG. 9.

The target data packet may be a data packet used for data transmission in the first data stream. For example, the target data packet may include valid data in one to-be-processed data packet, or may include valid data in a plurality of to-be-processed data packets. This is not specifically limited in this embodiment of this application.

For ease of description, the to-be-processed data packet may also be referred to as an ADL data packet or a first data packet, namely, a data packet of a fixed size obtained by performing ADL processing.

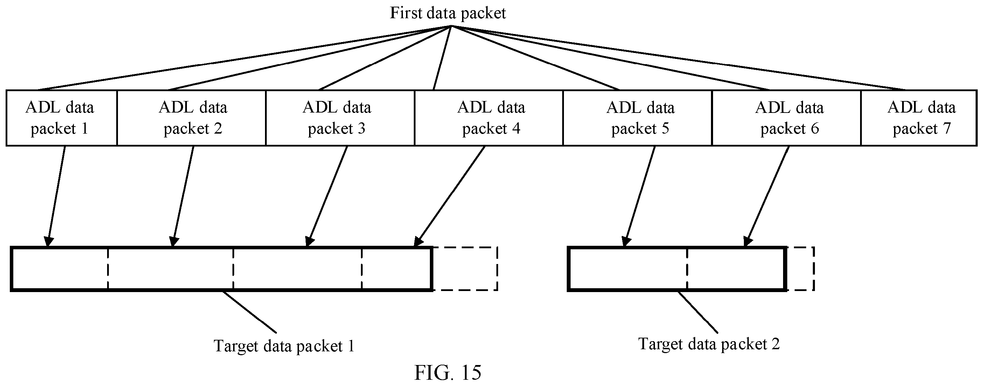

For example, FIG. 15 is a diagram of processing of a data packet according to an embodiment of this application. ADL data packets 1 to 7, a target data packet 1, and a target data packet 2 are included.

FIG. 15 is used to show a process in which the second electronic device processes a received data packet when M is equal to 1 (where a TDM interface transmits only data of one data stream). The ADL data packets 1 to 7 represent seven TDM frame signals sequentially received by the second electronic device, the target data packet 1 is a target data packet obtained by the second electronic device by processing the ADL data packets 1 to 4, and the target data packet 2 is a target data packet obtained by the second electronic device by processing the ADL data packets 5 and 6. For example, the processing process may be as follows: The second electronic device determines, based on indication information in the ADL data packet, whether the ADL data packet is a header/trailer and a quantity of valid bits. If the ADL data packet is not the trailer, the valid bit in the ADL data packet is stored in a cache queue. If the ADL data packet is the trailer, data in the cache queue is extracted to form a new data packet with valid bit data in the ADL data packet, that is, obtain the target data packet.

For example, all indication information in the ADL data packets 1 to 3 indicates that the ADL data packet is not the trailer and the valid bit is all the load information, and all the load information in the ADL data packets 1 to 3 is stored in the cache queue. Indication information in the ADL data packet 4 indicates that the ADL data packet 4 is the trailer and a quantity of valid bits is a target value, and valid information in the ADL data packet 4 and data in the cache queue are sequentially combined, to obtain a new data packet, namely, the target data packet 1. The target value may be a specific number, or may be in a form of a percentage. For example, the target value is 2 bytes, 50%, or the like. This is not limited in embodiments of this application.

For another example, indication information in the ADL data packet 5 indicates that the ADL data packet is not the trailer and the valid bit is all the load information, and all the load information in the ADL data packet 4 is stored in the cache queue. Indication information in the ADL data packet 6 indicates that the ADL data packet 6 is the trailer and a quantity of valid bits is a target value, and valid information in the ADL data packet 6 and data in the cache queue are sequentially combined, to obtain a new data packet, namely, the target data packet 2.

For another example, indication information in the ADL data packet 7 indicates that a quantity of valid bits in the ADL data packet is 0, and the data packet may be directly ignored.

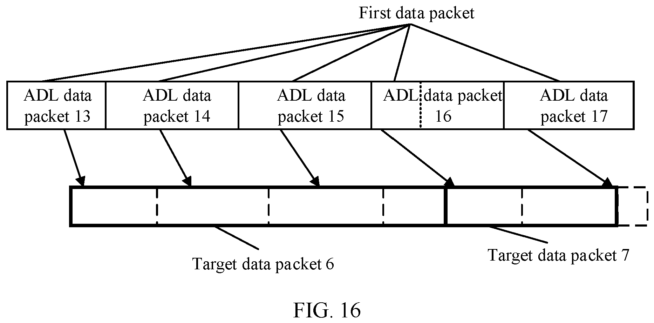

For example, FIG. 16 is a diagram of processing of another data packet according to an embodiment of this application. ADL data packets 13 to 17, a target data packet 6, and a target data packet 7 are included.

FIG. 16 is also used to show a process in which the second electronic device processes a received data packet when M is equal to 1 (where a TDM interface transmits only data of one data stream). A difference between FIG. 16 and FIG. 15 is that one ADL data packet in FIG. 15 may only be a header/trailer, but one ADL data packet in FIG. 16 may be a header/trailer, or may include both a header and a trailer. For example, the ADL data packet 16 includes both the header and the trailer.

The ADL data packets 13 to 17 represent five TDM frame signals sequentially received by the second electronic device, the target data packet 6 is a target data packet obtained by the second electronic device by processing the ADL data packets 13 to 16, and the target data packet 7 is a target data packet obtained by the second electronic device by processing the ADL data packets 16 and 17. For example, the processing process may be as follows: The second electronic device determines, based on indication information in the ADL data packet, whether the ADL data packet is a header/trailer and a quantity of valid bits. If the ADL data packet is not the trailer, the valid bit in the ADL data packet is stored in a cache queue. If the ADL data packet includes the trailer, the second electronic device further determines whether the ADL data packet further includes the header. If the ADL data packet does not include the header, the target data packet may be obtained in the processing manner shown in FIG. 15. Details are not described herein again.

If the ADL data packet further includes the header, a quantity N of headers is determined, and the load information in the ADL data packet is split into N+1 pieces based on the quantity N of headers. For example, if there is one header, the load information is split into two parts; if there are two headers, the load information is split into three parts; and so on. A size of each piece of data may be based on indication information in the ADL data packet. For example, when it indicates that the load information is split into two pieces, it indicates that a size of a first piece is 2 bytes, and a size of a second piece is 3 bytes. How to mark a size of each piece of data by using the indication information is not limited in embodiments of this application. After splitting is completed, the obtained first piece of data and the information in the cache queue may form a new data packet, namely, the target data packet. If the second piece of data is not the trailer, the second piece of data may be stored in the cache queue, and form a new data packet with subsequent data.

For example, if indication information in the ADL data packets 13 to 15 indicates that the ADL data packet is not the trailer, valid bit data in the ADL data packet may be stored in the cache queue based on the indication information (when the ADL data packet is not the trailer, the valid bit data is the load information). Indication information in the ADL data packet 16 indicates that the ADL data packet includes a trailer and a header. Therefore, load information in the ADL data packet 16 may be split into two pieces, and it further indicates that a size of a first piece of data is 2 bytes, and remaining data in the load information is a second piece. The first piece of data and the data in the cache queue may form a new data packet, namely, the target data packet 2. The second piece of data may be stored in the cache queue, and form a new data packet with subsequent data. Indication information in the ADL data packet 17 indicates that the ADL data packet includes only one trailer. In this case, valid bit data in the ADL data packet 17 may be restored based on the indication information, and the valid bit data and the data in the cache queue form a new data packet, namely, the target data packet 7.

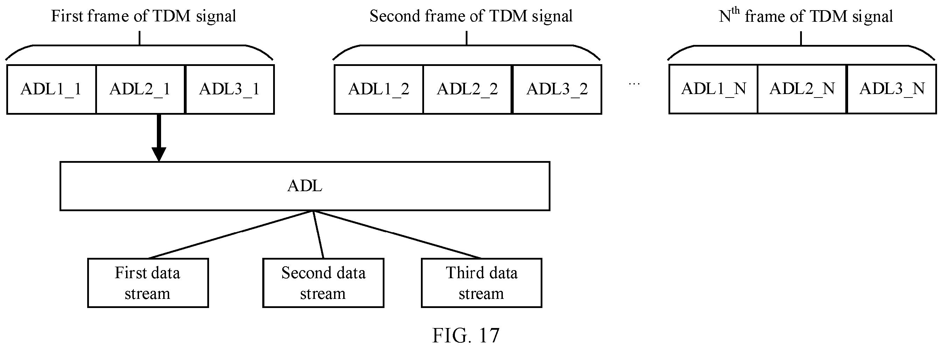

For example, FIG. 17 is a diagram of processing of another data packet according to an embodiment of this application. A first frame of TDM signal, a second frame of TDM signal, and a third frame of TDM signal are included.

FIG. 17 is used to show a process in which the second electronic device processes a received data packet when M is greater than 1 (where one frame of TDM signal includes a plurality of data packets, for example, ADL1_1, ADL2_1, and ADL3_1). A difference between FIG. 17 and FIG. 15 and FIG. 16 is that in the data packet processing processes shown in FIG. 15 and FIG. 16, only a data packet of one data stream needs to be processed. However, in the data packet processing process shown in FIG. 17, data packets of a plurality of data streams, namely, data packets of M data streams, need to be simultaneously processed, where M may be, for example, 3. When the data packets of the plurality of data streams are processed, the data packets of the plurality of data streams need to be first grouped and processed by group. A process of processing one of the groups is similar to a process of processing a data packet of one data stream shown in FIG. 15 and FIG. 16. For a specific implementation process, refer to FIG. 15 and FIG. 16. Details are not described herein again.

For example, indication information in each ADL data packet in FIG. 17 may indicate a data stream to which the ADL data packet belongs. For example, indication information in ADL1_1, ADL1_2, and ADL1_N indicates that the ADL data packets belong to a first data stream, indication information in ADL2_1, ADL2_2, and ADL2_N indicates that the ADL data packets belong to a second data stream, and indication information in ADL3_1, ADL3_2, and ADL3_N indicates that the ADL data packets belong to a third data stream. In FIG. 17, ADL1_1, ADL1_2, and ADL1_N are to-be-processed data packets or first data packets of the first data stream, ADL2_1, ADL2_2, and ADL2_N are to-be-processed data packets or first data packets of the second data stream, and ADL3_1, ADL3_2, and ADL3_N are to-be-processed data packets or first data packets of the second data stream. The to-be-processed data packets of the data streams are first grouped. For example, ADL1_1, ADL1_2, and ADL1_N are grouped into a first group, ADL2_1, ADL2_2, and ADL2_N are grouped into a second group, and ADL3_1, ADL3_2, and ADL3_N are grouped into a third group. A target data packet belonging to each group is obtained by using data of each group according to the processing solution shown in FIG. 15 or FIG. 16. A specific processing process is not described herein again.

The communication interface of the second electronic device is at least configured to receive the to-be-processed data packets of the M data streams, and M is an integer greater than or equal to 1. A total of M to-be-processed data packets are received, where the M to-be-processed data packets are in one-to-one correspondence with the M data streams, that is, the M to-be-processed data packets are the to-be-processed data packets of the M data streams. The first data stream in the M data streams is used as an example. The first to-be-processed data packet in the M to-be-processed data packets belongs to the first data stream, and the size of the first to-be-processed data packet is a fixed value. This is equivalent to that sizes of to-be-processed data packets belonging to the first data stream are all fixed values, that is, data of the first data stream is transmitted by using a fixed bandwidth. When the communication interface of the second electronic device receives to-be-processed data packets of a plurality of data streams, data of each data stream occupies a fixed bandwidth, which is equivalent to that data of the plurality of data streams may be received through one fixed-bandwidth communication interface.

Further, a quantity of data streams and a quantity of valid bits in the to-be-processed data packet can be determined by using the indication information in the to-be-processed data packet. A plurality of received to-be-processed data packets can be grouped based on the data stream, and data restoration can be performed on data in each group based on the quantity of valid bits, to obtain the target data packet.

**The following describes an apparatus for implementing the foregoing data transmission method.**

It should be understood that in the apparatus provided in embodiments of this application, division into units is merely logical function division. During actual implementation, all or some of the units may be integrated into one physical entity, or may be physically separated. In addition, the units of the apparatus may be implemented in a form of software invoked by a processor. For example, the apparatus includes a processor. The processor is connected to a memory. The memory stores instructions. The processor invokes the instructions stored in the memory to implement any one of the foregoing methods or implement functions of the units of the apparatus. The processor is, for example, a general-purpose processor, for example, a central processing unit (Central Processing Unit, CPU) or a microprocessor. The memory is a memory inside the apparatus or a memory outside the apparatus. Alternatively, the units of the apparatus may be implemented in a form of a hardware circuit, and functions of some or all of the units may be implemented by designing the hardware circuit. The hardware circuit may be understood as one or more processors. For example, in an implementation, the hardware circuit is an application-specific integrated circuit (application-specific integrated circuit, ASIC), and functions of some or all of the foregoing units are implemented by designing a logical relationship between elements in the circuit. For another example, in another implementation, the hardware circuit may be implemented through a programmable logic device (programmable logic device, PLD). For example, a field programmable gate array (Field Programmable Gate Array, FPGA) may include a large quantity of logic gate circuits, and a connection relationship between the logic gate circuits is configured by using a configuration file, to implement functions of a part or all of the foregoing units. All the units of the apparatus may be implemented in a form of software invoked by the processor, or may be implemented in a form of hardware circuit, or some of the units are implemented in a form of software invoked by the processor, and remaining units are implemented in a form of hardware circuit.

It may be learned that each unit of the following apparatus may be one or more processors (or processing circuits) configured to implement the foregoing method, for example, a CPU, a GPU, an NPU, a TPU, a DPU, a microprocessor, a DSP, an ASIC, an FPGA, or a combination of at least two of these processor forms.

In addition, all or some of the units of the foregoing apparatus may be integrated, or may be implemented independently. In an implementation, these units are integrated together and implemented in a form of a system-on-a-chip. The SOC may include at least one processor, configured to implement any one of the foregoing methods or implement the functions of the units of the apparatus. Types of the at least one processor may be different. For example, the at least one processor includes a CPU and an FPGA, a CPU and an artificial intelligence processor, or a CPU and a GPU.

The following lists two possible apparatuses.

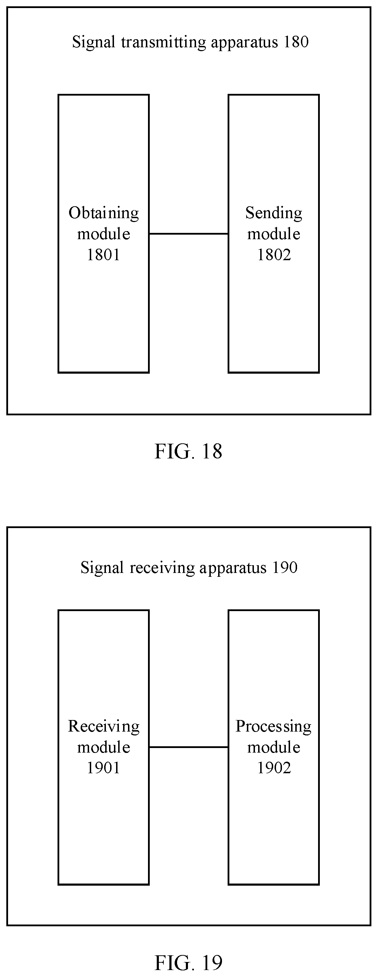

FIG. 18 is a diagram of a structure of a signal transmitting apparatus according to an embodiment of this application. The signal transmitting apparatus 180 includes an obtaining module 1801 and a sending module 1802. The obtaining module 1801 may be configured to perform operations such as determining, calculation, generation, and detection, and/or configured to support another process in the foregoing embodiments. The sending module 1802 may be configured to participate in a signal transmission process that includes but is not limited to signal generation, modulation, transmission, and the like.

Optionally, the signal transmitting apparatus 180 may be an independent device, or may be a component included in an independent device (for example, a first electronic device 510), for example, a chip, a software module, or an integrated circuit. The signal transmitting apparatus 180 is configured to implement the foregoing data transmission method, for example, the data transmission method shown in FIG. 9.

In a possible implementation, the obtaining module 1801 is configured to obtain a first data packet, where the first data packet is a to-be-sent data packet of a first data stream; and
the sending module 1802 is configured to send the first data packet, where
a size of the to-be-sent data packet of the first data stream is a first target value, the first target value is associated with a target bandwidth of the first data stream, the first data stream is a data stream in M data streams, the target bandwidth is less than or equal to a bandwidth of a communication interface, the to-be-sent data packet includes indication information and load information, a size of the load information is a second target value, and the second target value is less than the first target value.

Optionally, the obtaining module 1801 and the sending module 1802 are modules in a first electronic device. The sending module 1802 may be, for example, a communication interface in the first electronic device. The communication interface is at least configured to send to-be-sent data packets of the M data streams, where M is an integer greater than or equal to 1. For example, M is 8, 16, or 32.

In a possible implementation, when a size of a target data packet of the first data stream is less than the second target value, load information in the first data packet includes the target data packet and a padding bit.

In a possible implementation, when a size of a target data packet of the first data stream is equal to the second target value, load information in the first data packet is the target data packet.

In a possible implementation, when the target data packet of the first data stream is N times the second target value, N is an integer greater than or equal to 1, the target data packet consists of N segments of data, a size of each of the N segments of data is the second target value, and load information in the first data packet is one of the N segments of data.

In a possible implementation, when the size of the target data packet of the first data stream is L times the second target value, L is not an integer, the target data packet consists of P segments of data, P is an integer obtained by performing a ceiling operation on L, the P segments of data include P-1 segments of data and a P^{th} segment of data, a size of each of the P-1 segments of data is the second target value, a size of the P^{th} segment of data is less than the second target value, and load information in the first data packet is one of the P-1 segments of data, or load information in the first data packet includes the P^{th} segment of data and the padding bit.

In a possible implementation, when the first electronic device does not receive the target data packet of the first data stream, a quantity of valid bits included in the first data packet is 0.

In a possible implementation, the to-be-sent data packets of the M data streams are sequentially sent through the communication interface.

In a possible implementation, the indication information includes first indication information, and the first indication information indicates a data stream to which the to-be-sent data packet belongs.

In a possible implementation, the indication information includes second indication information, and the second indication information indicates a quantity of valid bits in the to-be-sent data packet.

In a possible implementation, the indication information includes third indication information, and the third indication information indicates a data stream to which the to-be-sent data packet belongs.

In a possible implementation, that the first data packet is the to-be-sent data packet of the first data stream includes: The first data packet is the to-be-sent data packet of the first data stream in a target transmission periodicity, and the communication interface is at least configured to send the to-be-sent data packets of the M data streams in the target transmission periodicity.

In a possible implementation, the communication interface includes a time division multiplexing TDM interface.

FIG. 19 is a diagram of a structure of a signal receiving apparatus according to an embodiment of this application. The signal receiving apparatus 190 includes a receiving module 1901 and a processing module 1902. The processing module 1902 may be configured to perform operations such as determining, calculation, generation, and detection, and/or configured to support another process in the foregoing embodiments. The receiving module 1901 may be configured to participate in a signal receiving process that includes but is not limited to signal receiving, demodulation, restoration, and the like.

Optionally, the signal receiving apparatus 190 may be an independent device, or may be a component included in an independent device (for example, a second electronic device 520), for example, a chip, a software module, or an integrated circuit. The signal receiving apparatus 190 is configured to implement the foregoing data transmission method, for example, the data transmission method shown in FIG. 15.

In a possible implementation, the receiving module 1901 is configured to receive M to-be-processed data packets; and
the processing module 1902 is configured to process the M to-be-processed data packets, where
a first to-be-processed data packet in the M to-be-processed data packets belongs to a first data stream, the first to-be-processed data packet includes indication information and load information, the first data stream is a data stream in M data streams, a size of the first to-be-processed data packet is a first target value, the first target value is associated with a target bandwidth for transmitting the first data stream, the target bandwidth is less than or equal to a bandwidth of a communication interface, a size of the load information is a second target value, and the second target value is less than the first target value.

Optionally, the receiving module 1901 and the processing module 1902 belong to a second electronic device. The receiving module 1901 may be, for example, a communication interface in the second electronic device. The communication interface is configured to receive to-be-processed data packets of the M data streams, where M is an integer greater than or equal to 1. For example, M is 3.

In a possible implementation, a target data packet of the first data stream includes a valid bit in the load information.

In a possible implementation, the indication information includes first indication information, and the first indication information indicates a data stream to which the first to-be-processed data packet belongs.

In a possible implementation, the indication information further includes second indication information, and the second indication information indicates a quantity of valid bits in the load information.

In a possible implementation, the indication information includes third indication information, and the third indication information indicates a data stream to which the to-be-sent data packet belongs.

In a possible implementation, that the first data packet is the to-be-sent data packet of the first data stream includes: The first data packet is the to-be-sent data packet of the first data stream in a target transmission periodicity, and the communication interface is at least configured to send the to-be-sent data packets of the M data streams in the target transmission periodicity.

In a possible implementation, the communication interface includes a TDM interface.

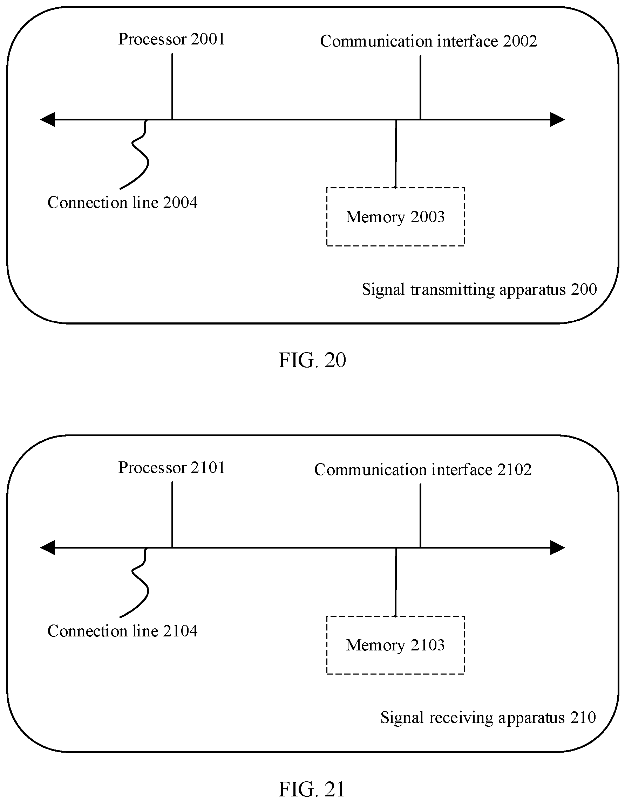

FIG. 20 is a diagram of another possible structure of a signal transmitting apparatus 200 according to an embodiment of this application. The signal transmitting apparatus 200 may include at least one processor 2001 and a communication interface 2002. Optionally, the signal transmitting apparatus 200 may further include at least one memory 2003. Further, optionally, the signal transmitting apparatus 200 may include a connection line 2004. The processor 2001, the communication interface 2002, and/or the memory 2003 are connected through the connection line 2004, and communicate with each other through the connection line 2004 to transfer a control signal and/or a data signal. Optionally, the signal transmitting apparatus 200 may be an independent device, for example, an independent device such as an ECU or a telematics box (T-box), or may be a component included in an independent device, for example, a chip, a software module, or an integrated circuit.

Specifically:
(1) The processor 2001 is a module for performing an arithmetic operation and/or a logical operation, and may specifically include one or more of the following apparatuses: a CPU, an MCU, a GPU, an MPU, an ASIC, an FPGA, a CPLD, a coprocessor (assisting the central processing unit in completing corresponding processing and application), an NPU, and/or the like.
(2) The communication interface 2002 may be configured to provide an information input or output for the at least one processor. In some possible scenarios, the communication interface 2002 may include an interface circuit, and/or the communication interface 2002 may be configured to receive data sent externally and/or send data to the outside. For example, the communication interface 2002 may include a wired link interface such as an Ethernet cable, or may be a wireless link (Wi-Fi, Bluetooth, universal wireless transmission, a vehicle-mounted short-range communication technology, another short-range wireless communication technology, or the like) interface. Optionally, the communication interface 2002 may further include a transmitter (for example, a radio frequency transmitter or an antenna), a receiver, or the like coupled to the interface.

Optionally, if the signal transmitting apparatus 200 is an independent device, the communication interface 2002 may include a receiver and a transmitter. The receiver and the transmitter may be a same component or different components. When the receiver and the transmitter are a same component, the component may be referred to as a transceiver.

Optionally, if the signal transmitting apparatus 200 is a chip or a circuit, the communication interface 2002 may include an input interface and an output interface, and the input interface and the output interface may be a same interface or different interfaces.

Optionally, a function of the communication interface 2002 may be implemented through a transceiver circuit or a dedicated transceiver chip. The processor 2001 may be implemented by a dedicated processing chip, a processing circuit, a processor, or a general-purpose chip.

(3) The memory 2003 is configured to provide storage space, and the storage space may store data such as an operating system and a computer program. The memory 2003 may be one or a combination of a random access memory (random access memory, RAM), a read-only memory (read-only memory, ROM), an erasable programmable read-only memory (erasable programmable read-only memory, EPROM), a compact disc read-only memory (compact disc read-only memory, CD-ROM), or the like.

The foregoing listed functions and actions of the modules or units in the signal transmitting apparatus 200 are merely examples for description.

Functional units in the signal transmitting apparatus 200 may be configured to implement the foregoing data transmission method. Herein, detailed descriptions are omitted to avoid repetition.

Optionally, the processor 2001 may be a processor specially configured to perform the foregoing method (for ease of distinguishing, the processor is referred to as a dedicated processor), or may be a processor that invokes a computer program to perform the foregoing method (for ease of distinguishing, the processor is referred to as a dedicated processor). Optionally, the at least one processor may alternatively include both a dedicated processor and a general-purpose processor.

Optionally, when the compute device includes the at least one memory 2003, if the processor 2001 invokes a computer program to implement the foregoing data transmission method, the computer program may be stored in the memory 2003.

FIG. 21 is a diagram of another possible structure of a signal receiving apparatus 210 according to an embodiment of this application. The signal receiving apparatus 210 may include at least one processor 2101 and a communication interface 2102. Optionally, the signal receiving apparatus 210 may further include at least one memory 2103. Further, optionally, the signal receiving apparatus 210 may include a connection line 2104. The processor 2101, the communication interface 2102, and/or the memory 2103 are connected through the connection line 2104, and communicate with each other through the connection line 2104 to transfer a control signal and/or a data signal. Optionally, the signal receiving apparatus 210 may be an independent device, for example, an ECU or a telematics box (T-box), or may be a component included in an independent device, for example, a chip, a software module, or an integrated circuit.

Specifically:
(1) The processor 2101 may be a module for performing an arithmetic operation and/or a logical operation, and may specifically include one or more of the following apparatuses: a CPU, an MCU, a GPU, an MPU, an ASIC, an FPGA, a CPLD, a coprocessor (assisting the central processing unit in completing corresponding processing and application), an NPU, and/or the like.
(2) The communication interface 2102 may be configured to provide an information input or output for the at least one processor. In some possible scenarios, the communication interface 2102 may include an interface circuit, and/or the communication interface 2102 may be configured to receive data sent externally and/or send data to the outside. For example, the communication interface 2102 may include a wired link interface such as an Ethernet cable, or may be a wireless link (Wi-Fi, Bluetooth, universal wireless transmission, a vehicle-mounted short-range communication technology, another short-range wireless communication technology, or the like) interface. Optionally, the communication interface 2102 may further include a transmitter (for example, a radio frequency transmitter or an antenna), a receiver, or the like coupled to the interface.

Optionally, if the signal receiving apparatus 210 is an independent device, the communication interface 2102 may include a receiver and a transmitter. The receiver and the transmitter may be a same component or different components. When the receiver and the transmitter are a same component, the component may be referred to as a transceiver.

Optionally, if the signal receiving apparatus 210 is a chip or a circuit, the communication interface 2102 may include an input interface and an output interface, and the input interface and the output interface may be a same interface or different interfaces.

Optionally, a function of the communication interface 2102 may be implemented through a transceiver circuit or a dedicated transceiver chip. The processor 2101 may be implemented by a dedicated processing chip, a processing circuit, a processor, or a general-purpose chip.

(3) The memory 2103 is configured to provide storage space, and the storage space may store data such as an operating system and a computer program. The memory 2103 may be one or a combination of a random access memory (random access memory, RAM), a read-only memory (read-only memory, ROM), an erasable programmable read-only memory (erasable programmable read-only memory, EPROM), a compact disc read-only memory (compact disc read-only memory, CD-ROM), or the like.

The foregoing listed functions and actions of the modules or units in the signal receiving apparatus 210 are merely examples for description.

Functional units in the signal receiving apparatus 210 may be configured to implement the foregoing data transmission method. Herein, detailed descriptions are omitted to avoid repetition.

Optionally, the processor 2101 may be a processor specially configured to perform the foregoing method (for ease of distinguishing, the processor is referred to as a dedicated processor), or may be a processor that invokes a computer program to perform the foregoing method (for ease of distinguishing, the processor is referred to as a dedicated processor). Optionally, the at least one processor may alternatively include both a dedicated processor and a general-purpose processor.

Optionally, when the compute device includes the at least one memory 2103, if the processor 2101 invokes a computer program to implement the foregoing data transmission method, the computer program may be stored in the memory 2103.

An embodiment of this application further provides a chip system. The chip system includes a processor and a communication interface. The communication interface is configured to receive and/or send data, and/or the communication interface is configured to provide an input and/or an output for the processor. The chip system is configured to implement the foregoing data transmission method, for example, the data transmission method shown in FIG. 9 or FIG. 15.

An embodiment of this application further provides a terminal. The terminal includes the signal transmitting apparatus and/or the signal receiving apparatus, for example, includes one or more of the following: the signal transmitting apparatus 180, the signal receiving apparatus 190, the signal transmitting apparatus 200, or the signal receiving apparatus 210.

In a possible implementation, the terminal may be an intelligent terminal or a transportation means such as a vehicle, an uncrewed aerial vehicle, or a robot.

An embodiment of this application further provides a data transmission system. The data transmission system includes a signal transmitting apparatus and a signal receiving apparatus, for example, includes the signal transmitting apparatus 180 and the signal receiving apparatus 190, or the signal transmitting apparatus 180 and the signal receiving apparatus 210, or the signal transmitting apparatus 200 and the signal receiving apparatus 190, or the signal transmitting apparatus 200 and the signal receiving apparatus 210.

An embodiment of this application further provides a computer-readable storage medium. The computer-readable storage medium stores instructions; and when the instructions are run on at least one processor, the foregoing data transmission method, for example, the data transmission method in FIG. 9 and FIG. 14, is implemented.

An embodiment of this application further provides a computer program product. The computer program product includes computer instructions; and when the computer instructions are executed by a compute device, the foregoing data transmission method, for example, the data transmission method shown in FIG. 9 and FIG. 14, is implemented.

A person of ordinary skill in the art may understand that all or some of the steps of embodiments may be implemented by hardware or a program instructing related hardware. The program may be stored in a computer-readable storage medium. The storage medium may be a read-only memory, a magnetic disk, an optical disc, or the like.

## Claims

1. A data transmission method, wherein the method is applied to a first electronic device, the first electronic device comprises a communication interface, the communication interface is at least configured to send to-be-sent data packets of M data streams, M is an integer greater than or equal to 1, and the method comprises:
obtaining a first data packet, wherein the first data packet is a to-be-sent data packet of a first data stream; and
sending the first data packet, wherein
a size of the to-be-sent data packet of the first data stream is a first target value, the first target value is associated with a target bandwidth of the first data stream, the first data stream is one of the M data streams, the target bandwidth is less than or equal to a bandwidth of the communication interface, the to-be-sent data packet comprises indication information and load information, a size of the load information is a second target value, and the second target value is less than the first target value.

2. The method according to claim 1, wherein when a size of a target data packet of the first data stream is N times the second target value, N is an integer greater than or equal to 1, the target data packet consists of N segments of data, a size of each of the N segments of data is the second target value, and load information in the first data packet is one of the N segments of data.

3. The method according to claim 1, wherein when a size of a target data packet of the first data stream is L times the second target value, L is not an integer, L is greater than 1, the target data packet consists of P segments of data, P is an integer obtained by performing a ceiling operation on L, the P segments of data comprise P-1 segments of data and a P^{th} segment of data, a size of each of the P-1 segments of data is the second target value, a size of the P^{th} segment of data is less than the second target value, and load information in the first data packet is one of the P-1 segments of data, or load information in the first data packet comprises the P^{th} segment of data and a padding bit.

4. The method according to any one of claims 1 to 3, wherein when the first electronic device does not receive the target data packet of the first data stream, all of the load information in the first data packet is a padding bit.

5. The method according to any one of claims 1 to 4, wherein the method further comprises:
sequentially sending the to-be-sent data packets of the M data streams through the communication interface.

6. The method according to any one of claims 1 to 5, wherein the indication information comprises first indication information, and the first indication information indicates a data stream type to which the to-be-sent data packet belongs.

7. The method according to any one of claims 1 to 6, wherein the indication information comprises second indication information, and the second indication information indicates a quantity of valid bits in the to-be-sent data packet.

8. The method according to any one of claims 1 to 7, wherein the indication information comprises third indication information, and the third indication information indicates a data stream identifier to which the to-be-sent data packet belongs.

9. The method according to any one of claims 1 to 8, wherein that the first data packet is the to-be-sent data packet of the first data stream comprises:
the first data packet is the to-be-sent data packet of the first data stream in a target transmission periodicity, and the communication interface is at least configured to send the to-be-sent data packets of the M data streams in the target transmission periodicity.

10. The method according to any one of claims 1 to 9, wherein the communication interface comprises a time division multiplexing TDM interface.

11. A data transmission method, wherein the method is applied to a second electronic device, the second electronic device comprises a communication interface, the communication interface is configured to receive to-be-processed data packets of M data streams, M is an integer greater than or equal to 1, and the method comprises:
receiving M to-be-processed data packets; and
processing the M to-be-processed data packets, wherein
a first to-be-processed data packet in the M to-be-processed data packets belongs to a first data stream, the first to-be-processed data packet comprises indication information and load information, the first data stream is one of the M data streams, a size of the first to-be-processed data packet is a first target value, the first target value is associated with a target bandwidth for transmitting the first data stream, the target bandwidth is less than or equal to a bandwidth of the communication interface, a size of the load information is a second target value, and the second target value is less than the first target value.

12. The method according to claim 11, wherein a target data packet of the first data stream comprises a valid bit in the load information.

13. The method according to claim 11 or 12, wherein the indication information comprises first indication information, and the first indication information indicates a data stream type to which the first to-be-processed data packet belongs.

14. The method according to any one of claims 11 to 13, wherein the indication information further comprises second indication information, and the second indication information indicates a quantity of valid bits in the load information.

15. The method according to any one of claims 11 to 14, wherein the indication information further comprises third indication information, and the third indication information indicates a data stream identifier to which the first to-be-processed data packet belongs.

16. The method according to any one of claims 11 to 15, wherein the communication interface comprises a TDM interface.

17. A data transmission apparatus, wherein the data transmission apparatus comprises a module configured to perform the method according to any one of claims 1 to 10 or the method according to any one of claims 11 to 16.

18. A data transmission system, wherein the data transmission system comprises a first electronic device and a second electronic device, the first electronic device is configured to perform the method according to any one of claims 1 to 10, and the second electronic device is configured to perform the method according to any one of claims 11 to 16.

19. A communication apparatus, wherein the communication apparatus comprises a processor and a storage medium, and the storage medium stores instructions; and when the instructions are run by the processor, the method according to any one of claims 1 to 10 or the method according to any one of claims 11 to 16 is implemented.

20. A computer-readable storage medium, wherein the computer-readable storage medium comprises instructions; and when the instructions are run by a processor, the method according to any one of claims 1 to 10 or the method according to any one of claims 11 to 16 is implemented.

21. A computer program product, wherein the computer program product comprises instructions; and when the instructions are run by a processor, the method according to any one of claims 1 to 10 or the method according to any one of claims 11 to 16 is implemented.
